# EUROPEAN PATENT SPECIFICATION

(11) **EP 3 057 269 B1**
(45) Date of publication and mention of the grant of the patent: **17.01.2018**
(21) Application number: 13896475.4
(22) Date of filing: 31.10.2013
(51) Int. Cl.: H04L 12/721

(54) **CONTROL CHANNEL ESTABLISHMENT METHOD, APPARATUS AND SYSTEM**
STEUERKANALAUFBAUVERFAHREN, VORRICHTUNG UND SYSTEM
PROCÉDÉ, APPAREIL ET SYSTÈME D'ÉTABLISSEMENT DE CANAL DE COMMANDE

(43) Date of publication of application: 17.08.2016
(73) Proprietor: Huawei Technologies Co., Ltd., Longgang District Shenzhen, Guangdong 518129 (CN)
(72) Inventor: LIN, Yi, Shenzhen Guangdong 518129 (CN)
(74) Representative: Maiwald Patentanwalts GmbH
(86) International application number: PCT/CN2013/086356
(87) International publication number: WO 2015/062045

(56) References cited:
- EP-A1- 1 282 331
- EP-A1- 2 469 775
- WO-A1-2012/110108
- WO-A1-2013/107335
- CN-A- 1 728 605
- CN-A- 102 026 046
- CN-A- 103 067 277

## Description

### TECHNICAL FIELD

The present invention relates to the field of communications, and in particular, to a method, an apparatus, and a system for establishing a control channel.

### BACKGROUND

In an intelligent optical network system using an ASON (Automatically Switched Optical Network) distributed architecture, each node in a network maintains a DCN (Data Communication Network), and transmits a control message by using the DCN. To resolve a problem of a resource conflict that easily occurs in a distributed architecture, the industry puts forward a centralized control architecture in which a controller is used to control all nodes in a system; therefore, the controller needs to be capable of communicating with each node. Generally, a DCN technology in an ASON is directly introduced to a controller and all nodes in a system, and the controller is connected only to one or a limited quantity of nodes, and is then indirectly connected to other nodes by using these nodes, thereby implementing communication between a transport network controller and each node.

In the prior art, a controller and each node in a network maintain a routing table of a DCN, and when the controller needs to send a control message to a node, the controller encapsulates the control message into an IP packet, searches the routing table of the DCN to determine a next-hop node, and forwards the IP packet to the next-hop node; and after receiving the IP packet, the next-hop node also searches the routing table according to an IP packet header and forwards the IP packet until the IP packet reaches a destination node.

In the foregoing process, in the intelligent optical network system, a hop-by-hop IP forwarding mechanism is used to transfer a control message, and due to influence of factors such as a DCN routing convergence speed, a routing table search speed, and a forwarding speed, a message sending speed is relatively slow; moreover, when the controller needs to send messages to multiple nodes simultaneously, or when multiple nodes send messages to the controller simultaneously, multiple IP packets participate in information receiving and sending, which may cause IP packet congestion, thereby further affecting the message sending speed, and affecting network performance.

EP2469775 relates to an information transmission method, a communication device and a communication system. The method includes: in a multi-layer network, obtaining a data packet including attribute information of a traffic engineering link locally; according to a layer type of the traffic engineering link corresponding to the attribute information of the traffic engineering link in the data packet, looking up a control channel allowing flooding the data packet based on a preset filtering rule, where the filtering rule includes a corresponding relationship between a layer type of the control channel and the layer type of the traffic engineering link; and sending the data packet from the control channel allowing flooding the data packet to connected a neighbor node. Embodiments of the present invention also provide a corresponding communication device and a communication system.

### SUMMARY

Embodiments of the present invention provide a method, an apparatus, and a system for establishing a control channel, which can improve a message sending speed, thereby improving network performance.

According to a first aspect, a method for establishing a control channel is disclosed, including:
sending, by a controller, a control link discovery message to a peer node of the control link by using a first subchannel on the control link, and receiving the control link discovery message sent by the peer node, wherein the control link discovery message comprises a port identifier at a sending end and node address information at the sending end of the control link;
obtaining, by the controller, a control link notification message sent by a node in a network, where the control link notification message includes node address information of both ends of a control link, port identifiers of both ends of the control link, and resource information of a second subchannel of the control link;
obtaining, by the controller, bandwidth information of a control channel between the controller and a destination node, where the bandwidth information of the control channel includes a resource of a second subchannel that needs to be occupied by the control channel;
obtaining, by the controller through calculation according to the control link notification message and the bandwidth information of the control channel, routing information of the control channel between the controller and the destination node;
selecting, by the controller, a first control link from control links between the controller and an adjacent downstream node on the control channel, where an idle resource of the first control link is greater than or equal to the resource of a second subchannel that needs to be occupied by the control channel; and
sending, by the controller, a control channel establishment message to the adjacent downstream node by using a first subchannel between the controller and the adjacent downstream node, so that the adjacent downstream node establishes the control channel on the second subchannel of the first control link, where the control channel establishment message includes the routing information of the control channel, information about the first control link selected by the controller, and the bandwidth information of the control channel.

With reference to the first aspect, in a first possible implementation manner, the resource of the second subchannel that needs to be occupied by the control channel includes a type and a quantity of second subchannels that need to be occupied by the control channel, or a total bandwidth of the second subchannels that need to be occupied by the control channel.

With reference to the first aspect or the second possible implementation manner of the first aspect, in a second possible implementation manner, after the selecting, by the controller, a first control link from control links between the controller and an adjacent downstream node on the control channel, the method further includes:
selecting, by the controller, N idle second subchannels from the first control link according to the bandwidth information of the control channel, where N is a positive integer, where
the control channel establishment message further includes information about the N second subchannels selected by the controller.

With reference to the first aspect or the second possible implementation manner of the first aspect, in a third possible implementation manner, the method further includes:
receiving, by the controller, a control channel establishment success message sent by the adjacent downstream node on the control channel, where the control channel establishment success message includes information about N idle second subchannels selected from the first control link by the adjacent downstream node according to the bandwidth information of the control channel, where N is a positive integer.

With reference to the first aspect, the first possible implementation manner of the first aspect, the second possible implementation manner of the first aspect, or the third possible implementation manner of the first aspect, in a fourth possible implementation manner, the obtaining, by a controller, a control link notification message sent by a node in a network specifically includes:
receiving, by the controller, a control link notification message with which an entire network is flooded by each node in the network by using the first subchannel, to obtain control link notification messages of the entire network.

According to a second aspect, a method for establishing a control channel is disclosed, including:
sending, by a transmission node, a control link discovery message to a peer node of the control link by using a first subchannel on the control link, and receiving the control link discovery message sent by the peer node, wherein the control link discovery message comprises a port identifier at a sending end and node address information at the sending end of the control link;
receiving, by the transmission node by using a first subchannel, a control channel establishment message sent by an adjacent upstream node on a control channel, where the control channel establishment message sent by the adjacent upstream node includes routing information of the control channel, information about a first control link selected by the adjacent upstream node, and bandwidth information of the control channel;
selecting, by the transmission node, a second control link from control links between the transmission node and an adjacent downstream node on the control channel according to the bandwidth information of the control channel, where an idle resource of the second control link is greater than or equal to a resource of a second subchannel that needs to be occupied by the control channel; and
sending, by the transmission node, a control channel establishment message to the adjacent downstream node on the control channel by using the first subchannel, so that the adjacent downstream node of the transmission node establishes the control channel on the second subchannel of the second control link, where the control channel establishment message sent by the transmission node includes the routing information of the control channel, information about the second control link, and the bandwidth information of the control channel, where the bandwidth information of the control channel includes the resource of a second subchannel that needs to be occupied by the control channel.

With reference to the second aspect, in a first possible implementation manner, the resource of the second subchannel that needs to be occupied by the control channel includes a type and a quantity of second subchannels that need to be occupied by the control channel, or a total bandwidth of the second subchannels that need to be occupied by the control channel.

With reference to the second aspect or the first possible implementation manner of the second aspect, in a second possible implementation manner, the control channel establishment message that is sent by the adjacent upstream node and that is received by the transmission node further includes information about N idle second subchannels selected from the first control link by the adjacent upstream node according to the bandwidth information of the control channel, where N is a positive integer; and
after the selecting, by the transmission node, a second control link from control links between the transmission node and an adjacent downstream node on the control channel, the method further includes:
selecting, by the transmission node, N idle second subchannels from the second control link according to the bandwidth information of the control channel; and
establishing, by the transmission node, a cross connection between the N second subchannels selected by the adjacent upstream node and the N second subchannels selected by the transmission node, where
the control channel establishment message sent by the transmission node to the adjacent downstream node on the control channel further includes information about the N second subchannels selected from the second control link by the transmission node.

With reference to the second aspect or the first possible implementation manner of the second aspect, in a third possible implementation manner, the method further includes:
receiving, by the transmission node, a control channel establishment success message sent by the adjacent downstream node, where the control channel establishment success message sent by the adjacent downstream node includes: N idle second subchannels selected from the second control link by the adjacent downstream node according to the bandwidth information of the control channel;
selecting, by the transmission node, N idle second subchannels from the second control link according to the bandwidth information of the control channel;
establishing, by the transmission node, a cross connection between the N second subchannels selected by the adjacent downstream node and the N second subchannels selected by the transmission node; and
sending, by the transmission node, a control channel establishment success message to the adjacent upstream node, where the control channel establishment success message sent by the transmission node includes information about the N second subchannels selected from the first control link by the transmission node.

With reference to the second aspect, the first possible implementation manner of the second aspect, the second possible implementation manner of the second aspect, or the third possible implementation manner of the second aspect, in a fourth possible implementation manner, before the receiving, by a transmission node by using a first subchannel, a control channel establishment message sent by an adjacent upstream node on a control channel, the method further includes:
flooding, by the transmission node, an entire network with a control link notification message, where the control link notification message includes node address information of both ends of a control link, port identifiers of both ends of the control link, and resource information of a second subchannel of the control link, where the resource information of the second subchannel includes a quantity of second subchannels and a type of each second subchannel.

With reference to the fourth possible implementation manner of the second aspect, in a fifth possible implementation manner, before flooding, by the transmission node, an entire network with a control link notification message, the method further includes:
sending, by the transmission node, a control link discovery message to a peer node of the control link by using a first subchannel on the control link, and receiving the control link discovery message sent by the peer node, where the control link discovery message includes a port identifier at a sending end and node address information at the sending end of the control link.

According to a third aspect, a method for establishing a control channel is disclosed, including:
sending, by a destination node, a control link discovery message to a peer node of the control link by using a first subchannel on the control link, and receiving the control link discovery message sent by the peer node, wherein the control link discovery message comprises a port identifier at a sending end and node address information at the sending end of the control link;
receiving, by the destination node by using a first subchannel, a control channel establishment message sent by an adjacent upstream node on a control channel, where the control channel establishment message includes routing information of the control channel, information about a first control link selected by the adjacent upstream node, and bandwidth information of the control channel, where the bandwidth information of the control channel includes a resource of a second subchannel that needs to be occupied by the control channel;
obtaining, by the destination node, N idle second subchannels from the first control link, where N is a positive integer; and
establishing, by the destination node, a cross connection between a main control unit of the destination node and the N second subchannels.
with reference to the third aspect, in a first possible implementation manner, the resource of the second subchannel that needs to be occupied by the control channel includes a type and a quantity of second subchannels that need to be occupied by the control channel, or a total bandwidth of the second subchannels that need to be occupied by the control channel.

With reference to the third aspect or the first possible implementation manner of the third aspect, in a second possible implementation manner, the control channel establishment message further includes information about N idle second subchannels selected from the first control link by the adjacent upstream node according to the bandwidth information of the control channel.

With reference to the third aspect or the first possible implementation manner of the third aspect, in a third possible implementation manner, the obtaining, by the destination node, N idle second subchannels from the first control link specifically includes:
selecting, by the destination node, N idle second subchannels from the first control link according to the bandwidth information of the control channel; and
the method further includes: sending, by the destination node, a control channel establishment success message to the adjacent upstream node, where the control channel establishment success message includes information about the N idle second subchannels selected from the first control link by the destination node.

With reference to the third aspect, the first possible implementation manner of the third aspect, the second possible implementation manner of the third aspect, or the third possible implementation manner of the third aspect, in a fourth possible implementation manner, before the receiving, by a destination node by using a first subchannel, a control channel establishment message sent by an adjacent upstream node on a control channel, the method further includes:
flooding, by the destination node, an entire network with a control link notification message, where the control link notification message includes node address information of both ends of a control link, port identifiers of both ends of the control link, and resource information of a second subchannel of the control link, where the resource information of the second subchannel includes a quantity of second subchannels and a type of each second subchannel, so that the controller obtains the control link notification message obtained by the destination node.

With reference to the first possible implementation manner of the third aspect, in a fifth possible implementation manner, before the flooding, by the destination node, an entire network with a control link notification message, the method further includes:
sending, by the destination node, a control link discovery message to a peer node of the control link by using a first subchannel on the control link, and receiving the control link discovery message sent by the peer node, where the control link discovery message includes a port identifier at a sending end and node address information at the sending end of the control link.

According to a fourth aspect, a controller is disclosed, including:
a sending unit, configured to send a control link discovery message to a peer node of the control link by using a first subchannel on the control link, and receiving the control link discovery message sent by the peer node, wherein the control link discovery message comprises a port identifier at a sending end and node address information at the sending end of the control link;
a first obtaining unit, configured to obtain a control link notification message sent by a node in a network, where the control link notification message includes node address information of both ends of a control link, port identifiers of both ends of the control link, and resource information of a second subchannel of the control link;
a second obtaining unit, configured to obtain bandwidth information of a control channel between the controller and a destination node, where the bandwidth information of the control channel includes a resource of a second subchannel that needs to be occupied by the control channel;
a calculation unit, configured to obtain, through calculation according to the control link notification message obtained by the first obtaining unit and the bandwidth information, of the control channel, obtained by the second obtaining unit, routing information of the control channel between the controller and the destination node;
a selection unit, configured to select a first control link from control links between the controller and an adjacent downstream node on the control channel, where an idle resource of the first control link is greater than or equal to the resource of a second subchannel that needs to be occupied by the control channel; and
the sending unit, is configured to send a control channel establishment message to the adjacent downstream node by using a first subchannel between the controller and the adjacent downstream node, so that the adjacent downstream node establishes the control channel on the second subchannel of the first control link, where the control channel establishment message includes the routing information of the control channel, information about the first control link selected by the controller, and the bandwidth information of the control channel.

With reference to the fourth aspect, in a first possible implementation manner, the resource of the second subchannel that needs to be occupied by the control channel includes a type and a quantity of second subchannels that need to be occupied by the control channel, or a total bandwidth of the second subchannels that need to be occupied by the control channel.

With reference to the fourth aspect or the first possible implementation manner of the fourth aspect, in a second possible implementation manner,
the selection unit is further configured to: after the first control link is selected from the control links between the controller and the adjacent downstream node on the control channel, select N idle second subchannels from the first control link according to the bandwidth information of the control channel, where N is a positive integer; and
the control channel establishment message sent by the sending unit to the adjacent downstream node further includes information about the N second subchannels selected by the controller.

With reference to the fourth aspect or the first possible implementation manner of the fourth aspect, in a third possible implementation manner, the second obtaining unit is further configured to receive a control channel establishment success message sent by the adjacent downstream node on the control channel, where the control channel establishment success message includes information about N idle second subchannels selected from the first control link by the adjacent downstream node according to the bandwidth information of the control channel, where N is a positive integer.

With reference to the fourth aspect, the first possible implementation manner of the fourth aspect, the second possible implementation manner of the fourth aspect, or the third possible implementation manner of the fourth aspect, in a fourth possible implementation manner, the first obtaining unit is specifically configured to: receive a control link notification message with which an entire network is flooded by each node in the network by using the first subchannel, to obtain control link notification messages of the entire network.

According to a fifth aspect, a node is disclosed, including:
a sending unit configured to send a control link discovery message to a peer node of the control link by using a first subchannel on the control link, wherein the control link discovery message comprises a port identifier at a sending end and node address information at the sending end of the control link;
a receiving unit configured to receive the control link discovery message sent by the peer node, and configured to receive, by using a first subchannel, a control channel establishment message sent by an adjacent upstream node on a control channel, where the control channel establishment message sent by the adjacent upstream node includes routing information of the control channel, information about a first control link selected by the adjacent upstream node, and bandwidth information of the control channel;
a selection unit, configured to select a second control link from control links between a current node and an adjacent downstream node on the control channel according to the control channel establishment message received by the receiving unit, where an idle resource of the second control link is greater than or equal to a resource of a second subchannel that needs to be occupied by the control channel; and
the sending unit, is configured to send a control channel establishment message to the adjacent downstream node on the control channel, so that the adjacent downstream node of the current node establishes the control channel on the second subchannel of the second control link selected by the selection unit, where the control channel establishment message sent by the sending unit includes the routing information of the control channel, information about the second control link selected by the selection unit, and the bandwidth information of the control channel, where the bandwidth information of the control channel includes the resource of a second subchannel that needs to be occupied by the control channel.

With reference to the fifth aspect, in a first possible implementation manner, the resource of a second subchannel that needs to be occupied by the control channel includes a type and a quantity of second subchannels that need to be occupied by the control channel, or a total bandwidth of the second subchannels that need to be occupied by the control channel.

With reference to the fifth aspect or the first possible implementation manner of the fifth aspect, in a second possible implementation manner, the node further includes a cross unit, where the control channel establishment message further includes information about N idle second subchannels selected from the first control link by the adjacent upstream node according to the bandwidth information of the control channel, where N is a positive integer;
the selection unit is further configured to: after the second control link is selected from the control links between the current node and the adjacent downstream node on the control channel, select N idle second subchannels from the second control link according to the bandwidth information of the control channel; and
the cross unit is further configured to establish a cross connection between the N second subchannels selected by the adjacent upstream node and the N second subchannels selected by the selection unit, where
the control channel establishment message sent by the sending unit further includes information about the N second subchannels selected by the selection unit.

With reference to the fifth aspect or the first possible implementation manner of the fifth aspect, in a third possible implementation manner, the receiving unit is further configured to receive a control channel establishment success message sent by the adjacent downstream node, where the control channel establishment success message sent by the adjacent downstream node includes N idle second subchannels selected from the second control link by the adjacent downstream node according to the bandwidth information of the control channel;
the selection unit is configured to: after the receiving unit receives the control channel establishment message, select N idle second subchannels from the first control link according to the bandwidth information of the control channel;
the node further includes a cross unit, configured to establish a cross connection between the N second subchannels selected by the adjacent upstream node and the N second subchannels selected by the selection unit; and
the sending unit is further configured to send a control channel establishment success message to the adjacent upstream node, where the control channel establishment success message sent by the sending unit includes: information about the N second subchannels selected from the first control link by the selection unit.

With reference to the fifth aspect, the first possible implementation manner of the fifth aspect, the second possible implementation manner of the fifth aspect, or the third possible implementation manner of the fifth aspect, in a fourth possible implementation manner, the sending unit is further configured to: before the receiving unit receives, by using the first subchannel, the control channel establishment message sent by the adjacent upstream node on the control channel, flood an entire network with a control link notification message, where the control link notification message includes node address information of both ends of a control link, port identifiers of both ends of the control link, and resource information of a second subchannel of the control link, where the resource information of the second subchannel includes a quantity of second subchannels and a type of each second subchannel.

With reference to the fourth possible implementation manner of the fifth aspect, in a fifth possible implementation manner, the sending unit is further configured to: before the sending unit floods an entire network with a control link notification message, send a control link discovery message to a peer node of the control link by using a first subchannel on the control link, where the control link discovery message includes a port identifier at a sending end and node address information at the sending end of the control link; and
the receiving unit is further configured to receive the control link discovery message sent by the peer node.

According to a sixth aspect, a transmission node is disclosed, including:
a sending unit configured to send a control link discovery message to a peer node of the control link by using a first subchannel on the control link, wherein the control link discovery message comprises a port identifier at a sending end and node address information at the sending end of the control link;
a receiving unit configured to receive the control link discovery message sent by the peer node, and configured to receive, by using a first subchannel, a control channel establishment message sent by an adjacent upstream node on a control channel, where the control channel establishment message sent by the adjacent upstream node includes routing information of the control channel, information about a first control link selected by the adjacent upstream node, and bandwidth information of the control channel, where the bandwidth information of the control channel includes a resource of a second subchannel that needs to be occupied by the control channel;
an obtaining unit, configured to obtain N idle second subchannels from the first control link, where N is a positive integer; and
a cross unit, configured to establish a cross connection between a main control unit of a current node and the N second subchannels obtained by the obtaining unit.

With reference to the sixth aspect, in a first possible implementation manner, the resource of the second subchannel that needs to be occupied by the control channel includes a type and a quantity of second subchannels that need to be occupied by the control channel, or a total bandwidth of the second subchannels that need to be occupied by the control channel.

With reference to the sixth aspect or the first possible implementation manner of the sixth aspect, in a second possible implementation manner, the control channel establishment message further includes information about N idle second subchannels selected from the first control link by the adjacent upstream node according to the bandwidth information of the control channel.

With reference to the sixth aspect or the first possible implementation manner of the sixth aspect, in a third possible implementation manner, the transmission node further includes a sending unit, where
the obtaining unit is specifically configured to select N idle second subchannels from the first control link according to the bandwidth information of the control channel; and
the sending unit is configured to send a control channel establishment success message to the adjacent upstream node, where the control channel establishment success message includes information about the N idle second subchannels selected from the first control link by the obtaining unit.

With reference to the sixth aspect, the first possible implementation manner of the sixth aspect, the second possible implementation manner of the sixth aspect, or the third possible implementation manner of the sixth aspect, in a fourth possible implementation manner, the sending unit is further configured to: before the receiving unit receives, by using the first subchannel, the control channel establishment message sent by the adjacent upstream node on the control channel, flood an entire network with a control link notification message, where the control link notification message includes node address information of both ends of a control link, port identifiers of both ends of the control link, and resource information of a second subchannel of the control link, where the resource information of the second subchannel includes a quantity of second subchannels and a type of each second subchannel, so that the controller obtains the control link notification message obtained by the current node.

With reference to the fourth possible implementation manner of the sixth aspect, in a fifth possible implementation manner,
the sending unit is further configured to: before an entire network is flooded with a control link notification message, send a control link discovery message to a peer node of the control link by using a first subchannel on the control link, where the control link discovery message includes a port identifier at a sending end and node address information at the sending end of the control link; and
the receiving unit is further configured to receive the control link discovery message sent by the peer node.

According to a seventh aspect, a system for establishing a control channel is disclosed, including: the controller according to any one of the fourth aspect to the second possible implementation manner of the fourth aspect, the node according to any one of the fifth aspect to the second possible implementation manner of the fifth aspect, and the node according to any one of the sixth aspect to the second possible implementation manner of the sixth aspect.

According to an eighth aspect, a system for establishing a control channel is disclosed, including: the controller according to the third possible implementation manner of the fourth aspect, the node according to the third possible implementation manner of the fifth aspect, and the node according to the third possible implementation manner of the sixth aspect.

According to the method, the apparatus, and the system for establishing a control channel provided in the embodiments of the present invention, in a centralized control mode, a controller calculates routing information between the controller and a destination node and establishes a unique control channel formed through a cross connection by second subchannels, so that a direct control channel is established between the controller and the node in advance, which resolves a problem of a relatively slow message sending speed caused by a process of DCN routing convergence, hop-by-hop routing forwarding, and routing table search, and can improve the message sending speed, thereby improving network performance.

### BRIEF DESCRIPTION OF DRAWINGS

FIG. 1 is a schematic structural diagram of a network in a centralized control architecture according to an embodiment of the present invention;
FIG. 2 is a structural diagram of a node according to an embodiment of the present invention;
FIG. 3 is a schematic flowchart of a method for establishing a control channel according to Embodiment 1 of the present invention;
FIG. 4 is a schematic flowchart of another method for establishing a control channel according to Embodiment 1 of the present invention;
FIG. 5 is a schematic flowchart of another method for establishing a control channel according to Embodiment 1 of the present invention;
FIG. 6 is a structural block diagram of a controller according to Embodiment 4 of the present invention;
FIG. 7 is a structural block diagram of a transmission node according to Embodiment 4 of the present invention;
FIG. 8 is a structural block diagram of a node according to Embodiment 4 of the present invention;
FIG. 9 is a structural block diagram of another controller according to Embodiment 5 of the present invention;
FIG. 10 is a structural block diagram of another transmission node according to Embodiment 5 of the present invention; and
FIG. 11 is a structural block diagram of another node according to Embodiment 5 of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some rather than all of the embodiments of the present invention. All other embodiments obtained by a person of ordinary skill in the art based on the embodiments of the present invention without creative efforts shall fall within the protection scope of the present invention.

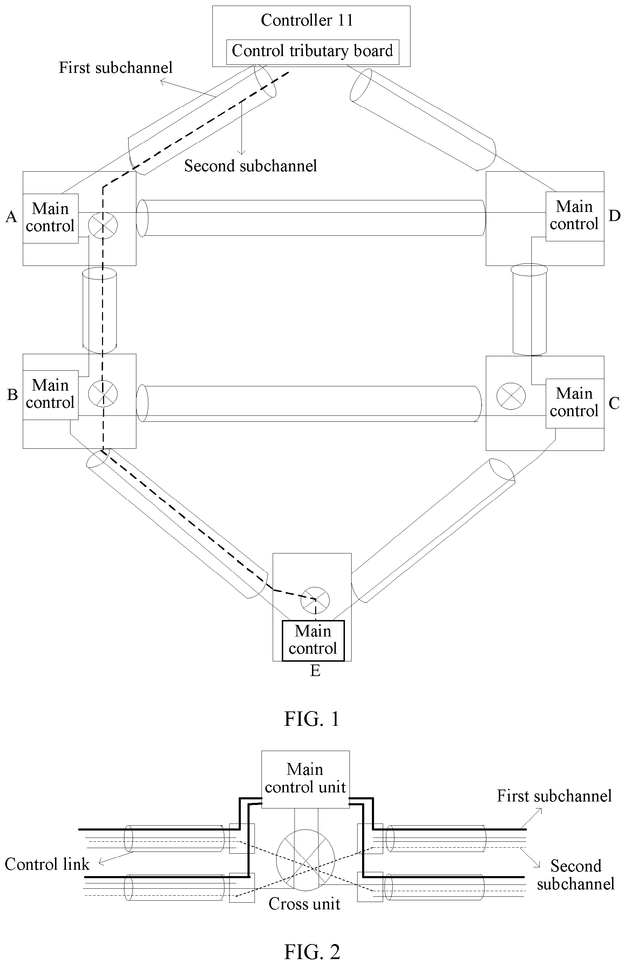

As shown in FIG. 1, a network in the embodiments of the present invention is an intelligent optical network in a centralized control architecture, a controller 11 in the network performs centralized on the entire network, the controller 11 is connected to a node A (or a node D) by using TDM (Time Division Multiplexing)-based multiple control links, and each node in the network is also connected to a peer node by using TDM-based multiple control links.

As shown in FIG. 2, by using a time division multiplexing technology, the control link may be divided into multiple subchannels, and multiplexing and demultiplexing may be performed between the control link and the subchannels. For example, a high-order ODU (Optical channel Data Unit) in a control channel may be demultiplexed into multiple low-order ODUjs (j=0,1,2,3) by using an OTN (Optical Transport Network) electrical-layer multiplexing technology, where a low-order ODUj is used as a subchannel; or a VC4 may be demultiplexed into multiple VC12s by using an SDH/SONET (Synchronous Digital Hierarchy/Synchronous Optical Network) multiplexing technology, where a VC12 is used as a subchannel. In addition, the two may be used in combination. For example, 4 low-order ODU1s are demultiplexed from a high-order ODU2, 16 VC4s are extracted from a payload of each ODU1, and 63 VC12s are demultiplexed from each VC4, where a VC12 is used as a subchannel.

A control tributary board in each node may perform grouping on subchannels, to group one or more specified subchannels into first subchannels, and the other subchannels into second subchannels. That is, each control link may include one or more first subchannels and one or more second subchannels.

The first subchannel is directly connected to a main control unit; therefore, control information transmitted in the first subchannel may be received and processed by a main control unit of a node; the second subchannel is connected to a cross unit, and may be connected in a crossed manner to the second subchannel in another control link of the node according to a need, or connected in a crossed manner to the main control unit of the node; and when the second subchannel is connected in a crossed manner to the second subchannel in another control link of the node, control information in the second subchannel is directly sent to a second subchannel in a next control link, that is, the main control unit of the node does not sense or process control information.

### Embodiment 1

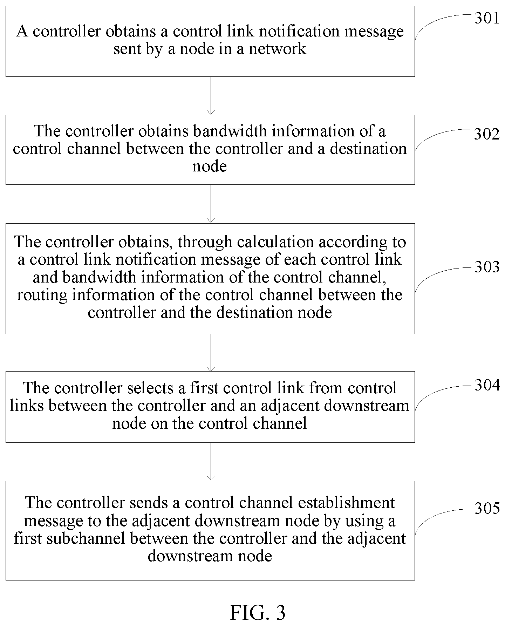

This embodiment of the present invention provides a method for establishing a control channel, which is executed by a controller. As shown in FIG. 3, the method includes the following steps:
301. A controller obtains a control link notification message sent by a node in a network. Because a first subchannel of a control link is connected to a main control unit on a node, the controller and each node in the network may send a control link discovery message to a peer node of the control link by using the first subchannel on the control link, and receive a control link discovery message sent by the peer node. In this way, automatic discovery of the control link is completed. The control link discovery message includes a port identifier (ID) at a sending end and node address information at the sending end of the control link, where the port ID of the control link is unique in the entire network, that is, port IDs at both ends of each control link uniquely determine a control link. Alternatively, the control link discovery message may also include both a port ID at a sending end and node address information at the sending end of the control link, where the port ID of the control link is unique only in a node of the sending end, that is, port IDs at both ends and node address information of both ends of each control link uniquely determine a control link.
   After the controller and each node complete automatic discovery of the control link, each node floods, by using the first subchannel, the entire network (including a transport network controller) with a control link notification message corresponding to a control link connected to a current node, where the control link notification message includes node address information of both ends of the control link, port IDs of both ends of the control link, and resource information of a second subchannel of the control link, where the resource information of the second subchannel of the control link includes a quantity of second subchannels on the control link and a type of each second subchannel.
   After receiving the control link notification message, with which the entire network is flooded by each node, of each control link, the controller saves the control link notification message, to obtain the control link notification message of each control link of the entire network.
302. The controller obtains bandwidth information of a control channel between the controller and a destination node.
   The bandwidth information of the control channel includes a resource of a second subchannel that needs to be occupied by the control channel. The resource of the second subchannel that needs to be occupied by the control channel includes a type and a quantity of second subchannels that need to be occupied by the control channel, or a total bandwidth of the second subchannels that need to be occupied by the control channel.
303. The controller obtains, through calculation according to the control link notification message of each control link and the bandwidth information of the control channel, routing information of the control channel between the controller and the destination node.
   The routing information of the control channel includes a transmission node by which the control channel between the controller and the destination node passes. The bandwidth information of the control channel includes a type and a quantity of second subchannels that need to be occupied by the control channel, or a total bandwidth of the second subchannels that need to be occupied by the control channel. Herein, the type of the second subchannel includes ODUj or VCxx.
   The controller may determine routing information of the control channel between the controller and the destination node according to the node address information of both ends of each control link, the resource information of the second subchannel, and the bandwidth information of the control channel.
304. The controller selects a first control link from control links between the controller and an adjacent downstream node on the control channel.
   An idle resource of the first control link is greater than or equal to the resource of a second subchannel that needs to be occupied by the control channel. Herein, the idle resource refers to a total bandwidth of the second subchannels that are not occupied in the control link, that is, a total resource of idle second subchannels.
   The controller has many control links between the controller and the adjacent downstream node on the control channel, and selects, from the control links, a first control link whose idle total resource is greater than or equal to the resource of a second subchannel that needs to be occupied by the control channel.
305. The controller sends a control channel establishment message to the adjacent downstream node by using a first subchannel between the controller and the adjacent downstream node.

The controller may select, according to the bandwidth information of the control channel, N idle second subchannels from the first control link selected by the controller, so that the N second subchannels meet a requirement that the control channel needs to occupy the resource of the second subchannel, where N is a positive integer, and the control channel establishment message carries information about the N second subchannels selected by the controller.

If the adjacent downstream node of the controller is a transmission node, the transmission node may receive information about N idle second subchannels, selected by the controller, between the transmission node and the controller, then select information about N idle second subchannels between the transmission node and the adjacent downstream node of the transmission node, and establish a cross connection between N second subchannels on both sides of the transmission node. At the same time, the transmission node sends a control channel establishment message to the adjacent downstream node of the transmission node, and adds the information about the N idle second subchannels that is selected by the transmission node to the sent control channel establishment message, until the adjacent downstream node is a destination node, so that a unique control channel is established between the controller and the destination node through connection of the second subchannels in the control link.

If the adjacent downstream node of the controller is a destination node, the destination node may receive the information about the N idle second subchannels, selected by the controller, between the transmission node and the controller, and then establish a cross connection between the N second subchannels and a main control unit of the destination node, so that a unique control channel is established between the controller and the destination node through connection of the second subchannels in the control link.

Alternatively, the controller does not select N idle second subchannels from the first control link; in this case, the control channel establishment message does not carry information about the N second subchannels selected by the controller.

If the adjacent downstream node of the controller is a transmission node, the transmission node initially only selects a second control link between the transmission node and the adjacent downstream node, but does not select N idle second subchannels. The transmission node sends a control channel establishment message to the adjacent downstream node of the transmission node on the control channel; in this case, the control channel establishment message only carries information about the second control link selected by the transmission node, until the adjacent downstream node is a destination node. The destination node selects N idle second subchannels from a second control link connected to the destination node, and sends a control channel establishment success message to an adjacent upstream node of the destination node, where the control channel establishment success message carries the selected N idle second subchannels. The adjacent upstream node of the destination node may receive information about the N idle second subchannels selected by the destination node, then select information about N idle second subchannels between the destination node and the adjacent upstream node, establish a cross connection between the N second subchannels on both sides of the adjacent upstream node of the destination node, and send a control channel establishment success message to the adjacent upstream node, where the control channel establishment success message carries the selected N idle second subchannels, until the adjacent upstream node is a controller, so that a unique control channel is established between the controller and the destination node through connection of the second subchannels in the control link.

After the control channel is established successfully, the controller may directly send a control message to the destination node by using the unique control channel between the controller and the destination node.

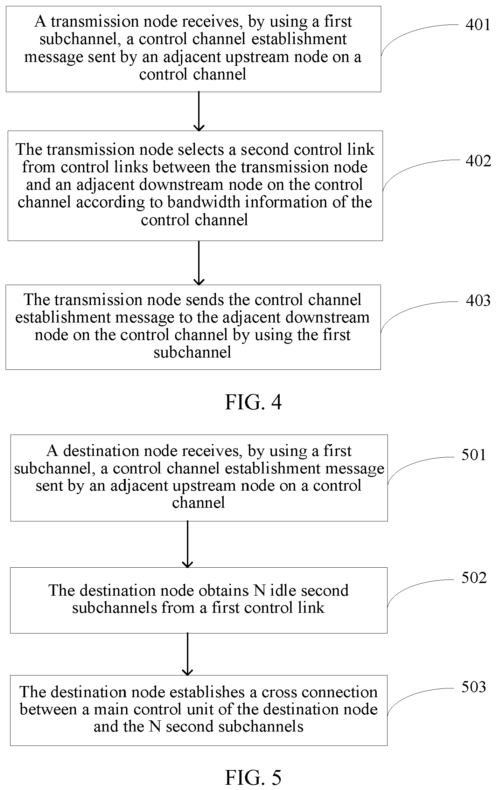

This embodiment of the present invention provides a method for establishing a control channel, which is executed by a transmission node. As shown in FIG. 4, the method includes the following steps:
401. A transmission node receives, by using a first subchannel, a control channel establishment message sent by an adjacent upstream node on a control channel.

The adjacent upstream node may be a controller, or may be an adjacent upstream transmission node of the transmission node, where the control channel establishment message sent by the adjacent upstream node includes routing information of the control channel, information about a first control link selected by the adjacent upstream node, and bandwidth information of the control channel.

Before the transmission node receives, by using a first subchannel, a control channel establishment message sent by an adjacent upstream node, the transmission node sends a control link discovery message to a peer node of the control link by using the first subchannel on the control link, and receives a control link discovery message sent by the peer node, where the control link discovery message includes a port ID at a sending end and node address information at the sending end of the control link. After the transmission node receives the control link discovery message sent by the peer node, the transmission node floods an entire network with a control link notification message of the control link on the transmission node, where the control link notification message includes node address information of both ends of the control link, port IDs at both ends of the control link, and resource information of the second subchannel of the control link, and the resource information of the second subchannel includes a quantity of second subchannels and a type of each second subchannel, so that the controller obtains a control link notification message of each control link on the transmission node.

After obtaining the control link notification message of each control link of the entire network, the controller obtains, through calculation according to the control link notification message of each control link and the bandwidth information of the control channel, routing information of the control channel between the controller and the destination node, selects, from control links between the controller and the adjacent upstream node on the control channel on the control channel, a first control link meeting a preset condition, and then, sends a control channel establishment message to the adjacent upstream node on the control channel on the control channel by using the first subchannel on the first control link.
402. The transmission node selects a second control link from control links between the transmission node and an adjacent downstream node on the control channel according to bandwidth information of the control channel.
   An idle resource of the second control link is greater than or equal to the resource of a second subchannel that needs to be occupied by the control channel, and the adjacent downstream node includes a destination node or an adjacent downstream transmission node of the transmission node.
403. The transmission node sends the control channel establishment message to the adjacent downstream node on the control channel by using the first subchannel.

Optionally, in a first case, the adjacent upstream node (the controller or the previous transmission node) may select N idle second subchannels from the first control link selected by the adjacent upstream node, and add, to the control channel establishment message, information about the N second subchannels selected by the controller.

In this case, the transmission node may receive the information about the N idle second subchannels, selected by the adjacent upstream node (which may be the controller), between the transmission node and the adjacent upstream node, then select information about N idle second subchannels between the transmission node and the adjacent downstream node, and establish a cross connection between N second subchannels on both sides of the transmission node, until the adjacent downstream node is a destination node, so that a unique control channel is established between the controller and the destination node through connection of the second subchannels in the control link.

Alternatively, optionally, in a second case, the adjacent upstream node (the controller or the previous transmission node) does not select N idle second subchannels from the first control link; in this case, the control channel establishment message only carries information about the first control link selected by the adjacent upstream node.

The transmission node initially only selects the first control link, but does not select the N idle second subchannels, until the destination node selects N idle second subchannels from the first control link connected to the destination node. The transmission node may receive information about the N idle second subchannels, selected by the adjacent downstream node (which may be the destination node), between the transmission node and the adjacent downstream node, then select information about N idle second subchannels between the transmission node and the adjacent upstream node, and establish a cross connection between N second subchannels on both sides of the transmission node, until the adjacent upstream node is a controller, so that a unique control channel is established between the controller and the destination node through connection of the second subchannels in the control link.

This embodiment of the present invention provides a method for establishing a control channel, which is executed by a destination node. As shown in FIG. 5, the method includes the following steps:
501. A destination node receives, by using a first subchannel, a control channel establishment message sent by an adjacent upstream node on a control channel.

Herein, the adjacent upstream node may be a controller, or may be an adjacent upstream transmission node of the destination node, and corresponding to the two cases of 305 or 403 above, for the control channel establishment message received by the destination node, there are also two cases:
A first case: if the adjacent upstream node selects the N idle second subchannels from a first control link selected by the adjacent upstream node, the control channel establishment message received by the destination node includes routing information of the control channel, information about the first control link selected by the adjacent upstream node, information about the N second subchannels selected by the adjacent upstream node, and bandwidth information of the control channel.

A second case: if the adjacent upstream node does not select the N idle second subchannels from a first control link selected by the adjacent upstream node, the control channel establishment message received by the destination node includes routing information of the control channel, information about the first control link selected by the adjacent upstream node, and bandwidth information of the control channel. The bandwidth information of the control channel includes a resource of a second subchannel that needs to be occupied by the control channel, where the resource of a second subchannel that needs to be occupied by the control channel includes a type and a quantity of second subchannels that need to be occupied by the control channel, or a total bandwidth of the second subchannels that need to be occupied by the control channel.
502. The destination node obtains N idle second subchannels from a first control link.

The adjacent upstream node selects the first control link from the control link between the adjacent upstream node and the destination node, where the control channel establishment message received by the destination node includes routing information of the control channel, information about the first control link selected by the adjacent upstream node, and bandwidth information of the control channel.

Corresponding to the two cases of 501, for the N idle second subchannels obtained from the first control link by the destination node, there are also two cases.

A first case: the control channel establishment message that is sent by the adjacent upstream node and that is received by the destination node includes N second subchannels, selected by the adjacent upstream node from the first control link, between the destination node and the adjacent upstream node.

A second case: the destination node selects, from the first control link selected by the adjacent upstream node, the N second subchannels between the destination node and the adjacent upstream node.
503. The destination node establishes a cross connection between a main control unit of the destination node and the N second subchannels.

Certainly, the destination node further sends a control channel establishment success message to the transmission node.

After establishing a connection between the main control unit and N second subchannels that are between the destination node and the adjacent upstream node, the destination node sends a control channel establishment success message to the adjacent upstream node. Corresponding to the two cases of 502, for the control channel establishment success message sent by the destination node, there are also two cases:
A first case: after establishing a connection between N second subchannels selected from the adjacent upstream node and the main control unit, the destination node forwards a control channel establishment success message to the controller by using an adjacent upstream node on the control channel.

A second case: after establishing a connection between N second subchannels selected from the destination node and the main control unit, the destination node sends a control channel establishment success message to the transmission node. In this case, the control channel establishment success message further includes information about the N idle second subchannels selected from the first control link selected on the adjacent upstream node by the destination node.

According to the method for establishing a control channel provided in this embodiment of the present invention, in a centralized control mode, a controller calculates routing information between the controller and a destination node and establishes a unique control channel formed through a cross connection by second subchannels, so that a direct control channel is established between the controller and the node in advance, which resolves a problem of a relatively slow message sending speed caused by a process of DCN routing convergence, hop-by-hop routing forwarding, and routing table search, and can improve the message sending speed, thereby improving network performance.

### Embodiment 2

This embodiment of the present invention provides a method for establishing a control channel, where the method includes the following steps:
601. A controller and each node send, by using a first subchannel on a control link, a control link discovery message to a peer node of the control link.
   Herein, the control link discovery message sent by the controller and each node includes a port ID at a sending end and node address information at the sending end of the control link.
   M control links may exist between a controller (or each node in a network) and a peer node of the controller; in this case, the controller (or each node in the network) needs to send M control link discovery messages to the peer node, and each control link discovery message includes a port ID at a sending end and node address information at the sending end of the control link, where the port ID of the control link is unique in the entire network, that is, port IDs at both ends of each control link uniquely determine a control link. Alternatively, the control link discovery message may also include a port ID at a sending end and node address information at the sending end of the control link, where the port ID of the control link is only unique in a node of the sending end, that is, the port IDs at both ends and the node address information of both ends of each control link uniquely determine a control link.
   After the controller and each node in the entire network send a control link discovery message to each other by using the control link, automatic discovery of the control link is completed.
602. After receiving the control link discovery message sent by the peer node, the controller and each node flood an entire network with a control link notification message.
   After receiving the control link discovery message sent by the peer node, the controller and each node may obtain node address information of both ends of all control links corresponding to a current node and port IDs at both ends of the control link. Because each node divides, by using a time division multiplexing technology, a control link corresponding to the current node into multiple subchannels, and decides second subchannels, each node stores resource information of a second subchannel of a control link corresponding to the current node. Therefore, the control link notification message with which the entire network is flooded by the controller and each node after the controller and each node receive the control link discovery message may include: node address information of both ends of the control link, port IDs at both ends of the control link, and resource information of the second subchannel of the control link, where the resource information of the second subchannel of the control link includes a quantity of second subchannels on the control link and a type of each second subchannel.
603: The controller obtains a control link notification message sent by a node in a network. After receiving the control link notification message, with which the entire network is flooded by each node, of each control link, the controller obtains the control link notification message of each control link in the entire network.
604. The controller obtains bandwidth information of a control channel between the controller and a destination node.
   The bandwidth information of the control channel includes a resource of a second subchannel that needs to be occupied by the control channel. The resource of the second subchannel that needs to be occupied by the control channel includes a type and a quantity of second subchannels that need to be occupied by the control channel, or a total bandwidth of the second subchannels that need to be occupied by the control channel.
605. The controller obtains, through calculation according to a control link notification message of each control link and bandwidth information of the control channel, routing information of the control channel between the controller and the destination node.
   After obtaining the control link notification message of each control link in the entire network, the controller learns a topological structure of the entire network.
   In this way, the controller may obtain a type (that is, a bandwidth) and a quantity of second subchannels in each control link according to the resource information of the second subchannel of the control link in the control link notification message of each control link. The routing information of the control channel between the controller and the destination node may be calculated in combination with the type and the quantity of second subchannels that need to be occupied by the bandwidth information of the control channel or the total bandwidth of second subchannels that need to be occupied, and the node address information of both ends of the control link.
606. The controller selects a first control link from control links between the controller and an adjacent downstream node on the control channel, and selects N idle second subchannels from the first control link according to the bandwidth information of the control channel.
   Herein, an idle resource of the first control link is greater than or equal to the resource of a second subchannel that needs to be occupied by the control channel, and the N idle second subchannels refer to N second subchannels that are not connected in a crossed manner by using the cross unit.
   If the bandwidth information of the control channel is the type and the quantity of second subchannels that need to be occupied by the control channel, the controller selects, according to the bandwidth information of the control channel, a type and a quantity of second subchannels used to establish a control channel. Exemplarily, if the bandwidth information of the control channel is that the type of second subchannels that need to be occupied by the control channel is ODU0, and the quantity of the second subchannels that need to be occupied by the control channel is 2, the controller selects 2 ODU0s as control channels.
   If the bandwidth information of the control channel is a total bandwidth of the second subchannels that need to be occupied by the control channel, the controller first divides the total bandwidth by a bandwidth of the second subchannel (each type of second subchannel corresponds to a corresponding bandwidth), to obtain the quantity of second subchannels that need to be occupied. The type of second subchannels mainly includes ODUj or VCxx, and it is known that a bandwidth of ODUj is 1.25G. Exemplarily, if according to the resource information of the second subchannel of the control link in the control link notification message, it is obtained that the type of the second subchannel in the first control link is ODUj, and it is obtained that the total bandwidth of the second subchannels that need to be occupied by the control channel is 5G, where 5 divided by 1.25 equals 4, it is obtained that N = 4, that is, the controller selects 4 idle second subchannels from the selected first control link.
607. The controller sends a control channel establishment message to the adjacent downstream node on the control channel.
   The control channel establishment message sent by the controller to the adjacent downstream node on the control channel by using the first subchannel includes routing information of the control channel, information about the first control link selected by the controller, information about the N second subchannels selected by the controller, and bandwidth information of the control channel.
   When the adjacent downstream node is a transmission node, steps 608 to 611 are performed, and when the adjacent downstream node is a destination node, step 612 is performed.
608. The transmission node receives, by using the first subchannel, the control channel establishment message sent by the adjacent upstream node.
   The control channel establishment message that is sent by the controller and that is received by the transmission node includes routing information of the control channel, bandwidth information of the control channel, information about the first control link selected by the controller, and information about the N second subchannels selected by the controller.
609. The transmission node selects a second control link from control links between the transmission node and the adjacent downstream node on the control channel according to the bandwidth information of the control channel, and selects N idle second subchannels from the second control link according to the bandwidth information of the control channel.
   Herein, an idle resource of the second control link is greater than or equal to the resource of a second subchannel that needs to be occupied by the control channel, and the N idle second subchannels refer to N second subchannels that are not connected in a crossed manner by using the cross unit.
610. The transmission node establishes a cross connection between the N second subchannels selected by the adjacent upstream node and the N second subchannels selected by the transmission node.
   In this way, the N second subchannels on both sides of the transmission node are connected in a one-to-one correspondence, to form a unique channel.
611. The transmission node sends a control channel establishment message to the adjacent downstream node on the control channel by using the first subchannel.
   Herein, the control channel establishment message sent by the transmission node includes routing information of the control channel, bandwidth information of the control channel, information about the first control link selected by the adjacent upstream node, and information about N second subchannels selected by the adjacent upstream node.
   When the adjacent downstream node is not a destination node, the adjacent downstream node (that is, an adjacent downstream transmission node) performs steps 608 to 611, until the adjacent downstream node in step 611 is a destination node, and then performs step 611.
612. The destination node receives, by using the first subchannel, the control channel establishment message sent by the adjacent upstream node.
   Herein, the adjacent upstream node may be a controller, or may be a transmission node.
   The control channel establishment message that is sent by the adjacent upstream node and that is received by the destination node includes routing information of the control channel, bandwidth information of the control channel, information of the first control link selected by the adjacent upstream node, and N second subchannels selected by the adjacent upstream node.
613. The destination node establishes a cross connection between a main control unit of the destination node and the N second subchannels.
   In this way, a direct control channel is established between the controller and the destination node by using the cross connection of the second subchannels. By using the control channel, the controller can only send a message to the destination node, and message transmission between the controller and the destination node may be directly performed without needing that another node searches a routing table and performs forwarding.
614. The destination node sends a control channel establishment success message to the controller.
   The destination node may send the control channel establishment success message to the controller by using an adjacent upstream node on the control channel.
615. The controller sends a control message to the destination node by using the control channel.

After the direct control channel is established between the controller and the destination node, the direct control channel may be used to transmit a control message between the controller and the destination node. For example:
1) The destination node may directly report, by using the control channel, messages such as identifier information, resource information, and link fault information of a data link of the destination node to the controller.
2) When the controller needs to establish a new path to bear a service, the controller may calculate a service path by using resource information of a data link, and then directly delivers a cross establishment command message to each transmission node on the service path by using the control channel.
3) When the service path is faulty on a link, nodes at both ends of the link may send fault information to the controller by using the control channel; the controller determines to perform re-routing on the service path or switching to a protection path, and after determining whether to preempt a resource occupied by another service, delivers a cross establishment command message, or a resource preemption command message to a node on the re-routing path or the protection path by using the control channel.

According to the foregoing steps, a direct control channel may be established between the controller and the destination node, to protect secure transmission between the controller and the destination node, and another direct control channel may be established between the controller and the destination node for use as a backup control channel. In this way, when a control channel is faulty, the another control channel may be used to perform transmission. The method used may follow steps 604 to 614, which are not described again herein.

The following describes the method provided in this embodiment of the present invention in a specific application scenario. As shown in FIG. 1, it is assumed that a network includes a controller and five nodes A, B, C, D, and E. That a control channel between the controller and the node E is established is used as an example.

First, the controller and the nodes A, B, C, D, and E send a control link discovery message to a peer node of a control link by using a first subchannel on the control link, after receiving the control link discovery message sent by the peer node, the controller and each node flood an entire network with a control link notification message, so that the controller obtains the control link notification message of each control link in the entire network.

After obtaining the control link notification message of each control link in the entire network, the controller learns a topological structure (including information about each node and port information of each control link) in an entire network shown in FIG. 1 and resource information of a second subchannel of the control link. In this way, routing (assuming that the routing is controller-A-B-E) from the controller to the destination node E and bandwidth information of the control channel may be calculated, that is, the control channel occupies N second subchannels.

The controller first selects a first control link from control links between the controller and the node A, then selects N idle second subchannels from the first control link selected by the controller, and then sends a control channel establishment message to the node A. The control channel establishment message includes routing information (controller-A-B-E) of the control channel, information about the N second subchannels, selected by the controller, between the controller and the node A, information about the first control link selected by the controller, and bandwidth information of the control channel.

After receiving the control channel establishment message, the node A first selects a second control link from control links between the node A and the node B, and then selects N idle second subchannels from the second control link selected by the node A. The node A then establishes a cross connection between the N second subchannels selected by the controller and the N second subchannels selected by the node A. Next, the node A sends a control channel establishment message to an adjacent downstream node B on the control channel. The control channel establishment message sent by the node A includes routing information of the control channel, bandwidth information of the control channel, and information about the N second subchannels selected by the node A.

After receiving, by using the first subchannel, the control channel establishment message sent by the controller, same as the node A, the node B first selects a third control link from control links between the node B and the adjacent downstream node (the destination node) E, and then selects N idle second subchannels from the third control link selected by the node B. The node B establishes a cross connection between the N second subchannels selected by the node A and the N second subchannels selected by the node B, and sends a control channel establishment message to the adjacent downstream node (the destination node) E on the control channel. The control channel establishment message sent by the node B includes routing information of the control channel, bandwidth information of the control channel, and information about the N second subchannels selected by the node B.

After receiving, by using the first subchannel, the control channel establishment message sent by the node B, the node E establishes a cross connection between a main control unit of the node E and N second subchannels between the node B and the node E. The node E then sends a control channel establishment success message to the controller by using the node B and the node A.

In this way, a direct control channel is established between the controller and the destination node by using the second subchannel. By using the control channel, the controller can only send a message to the destination node, and message transmission between the controller and the destination node may be directly performed without needing that another node searches a routing table and performs forwarding.

According to the method for establishing a control channel provided in this embodiment of the present invention, in a centralized control mode, a controller calculates routing information between the controller and a destination node and establishes a unique control channel formed through a cross connection by second subchannels, so that a direct control channel is established between the controller and the node in advance, which resolves a problem of a relatively slow message sending speed caused by a process of DCN routing convergence, hop-by-hop routing forwarding, and routing table search, and can improve the message sending speed, thereby improving network performance.

### Embodiment 3

This embodiment of the present invention provides a method for establishing a control channel, where the method includes the following steps:
701. A controller and each node send, by using a first subchannel on a control link, a control link discovery message to a peer node of the control link.

Herein, the control link discovery message sent by the controller and each node includes a port ID at a sending end and node address information at the sending end of the control link.

M control links may exist between a controller (or each node in a network) and a peer node of the controller; in this case, the controller (or each node in the network) needs to send M control link discovery messages to the peer node, and each control link discovery message includes a port ID at a sending end and node address information at the sending end of the control link, where the port ID of the control link is unique in the entire network, that is, port IDs at both ends of each control link uniquely determine a control link. Alternatively, the control link discovery message may also include a port ID at a sending end and node address information at the sending end of the control link, where the port ID of the control link is only unique in a node of the sending end, that is, the port IDs at both ends and the node address information of both ends of each control link uniquely determine a control link.

After the controller and each node in the entire network send a control link discovery message to each other by using the control link, automatic discovery of the control link is completed. 702. After receiving the control link discovery message sent by the peer node, the controller and each node flood an entire network with a control link notification message.

After receiving the control link discovery message sent by the peer node, the controller and each node may obtain node address information of both ends of all control links corresponding to a current node and port IDs at both ends of the control link. Because each node divides, by using a time division multiplexing technology, a control link corresponding to the current node into multiple subchannels, and decides second subchannels, each node stores resource information of a second subchannel of a control link corresponding to the current node. Therefore, the control link notification message with which the entire network is flooded by the controller and each node after the controller and each node receive the control link discovery message may include: node address information of both ends of the control link, port IDs at both ends of the control link, and resource information of the second subchannel of the control link, where the resource information of the second subchannel of the control link includes a quantity of second subchannels on the control link and a type of each second subchannel.
703: The controller obtains a control link notification message sent by a node in a network. After receiving the control link notification message, with which the entire network is flooded by each node, of each control link, the controller obtains the control link notification message of each control link in the entire network.
704. The controller obtains bandwidth information of a control channel between the controller and a destination node.
   The bandwidth information of the control channel includes a resource of a second subchannel that needs to be occupied by the control channel. The resource of the second subchannel that needs to be occupied by the control channel includes a type and a quantity of second subchannels that need to be occupied by the control channel, or a total bandwidth of the second subchannels that need to be occupied by the control channel.
705. The controller obtains, through calculation according to the control link notification message and the bandwidth information of the control channel, routing information of the control channel between the controller and the destination node.
   After obtaining the control link notification message of the entire network, the controller learns a topological structure of the entire network. In this way, the controller may obtain a type (that is, a bandwidth) and a quantity of second subchannels in each control link according to the resource information of the second subchannel of the control link in each control link notification message of each control link. The routing information of the control channel between the controller and the destination node may be calculated in combination with the type and the quantity of second subchannels that need to be occupied by the bandwidth information of the control channel or the total bandwidth of second subchannels that need to be occupied, and the node address information of both ends of the control link.
706. The controller selects a first control link from control links between the controller and an adjacent downstream node on the control channel.
   Herein, an idle resource of the first control link is greater than or equal to the resource of a second subchannel that needs to be occupied by the control channel.
707. The controller sends a control channel establishment message to the adjacent downstream node on the control channel.
   Herein, the control channel establishment message sent by the controller to the adjacent downstream node on the control channel by using the first subchannel includes routing information of the control channel, information about the first control link selected by the controller, and bandwidth information of the control channel.
   When the adjacent downstream node is a transmission node, steps 708 to 710 are performed, and when the adjacent downstream node is a destination node, step 711 is performed.
708. The transmission node receives, by using the first subchannel, the control channel establishment message sent by the adjacent upstream node.
   The control channel establishment message received by the transmission node includes routing information of the control channel, bandwidth information of the control channel, and information about the first control link selected by the controller.
709. The transmission node selects a second control link from control links between the transmission node and the adjacent downstream node on the control channel according to the bandwidth information of the control channel.
   Herein, an idle resource of a second subchannel of the second control link is greater than or equal to the resource of a second subchannel that needs to be occupied by the control channel. The N idle second subchannels refer to N second subchannels that are not connected in a crossed manner by using the cross unit.
710. The transmission node sends a control channel establishment message to the adjacent downstream node on the control channel by using the first subchannel.
   Herein, the control channel establishment message sent by the transmission node to the adjacent downstream node includes routing information of the control channel, bandwidth information of the control channel, and information about the second control link selected by the transmission node.
   If the adjacent downstream node in 710 is an adjacent downstream transmission node, 708 to 710 are repeated; and if the adjacent downstream node in 710 is a destination node, 711 is performed.
711. The destination node receives, by using the first subchannel, the control channel establishment message sent by an adjacent upstream node on the control channel, and selects, according to the bandwidth information of the control channel, N idle second subchannels from the second control link selected on the adjacent upstream node.
   Herein, the destination node selects, according to the bandwidth information of the control channel, N idle second subchannels from the second control link selected on the adjacent upstream node. If the bandwidth information of the control channel is the type and the quantity of second subchannels that need to be occupied by the control channel, the destination node selects, according to the bandwidth information of the control channel, a type and a quantity of second subchannels used to establish a control channel. Exemplarily, if the bandwidth information of the control channel is that the type of second subchannels that need to be occupied by the control channel is ODU0, and the quantity of the second subchannels that need to be occupied by the control channel is 2, the controller selects 2 ODU0s as control channels.
   If the bandwidth information of the control channel is a total bandwidth of the second subchannels that need to be occupied by the control channel, the destination node first divides the total bandwidth by a bandwidth of the second subchannel (each type of second subchannel corresponds to a corresponding bandwidth), to obtain the quantity of second subchannels that need to be occupied. The type of second subchannels mainly includes ODUj or VCxx, and it is known that a bandwidth of ODUj is 1.25G. Exemplarily, if according to the resource information of the second subchannel of the control link in the control link notification message, it is obtained that the type of the second subchannel in the control link is ODUj, and it is obtained that the total bandwidth of the second subchannels that need to be occupied by the control channel is 5G, where 5 divided by 1.25 equals to 4, it is obtained that N = 4, that is, the destination node selects 4 idle second subchannels from the selected control link.
712. The destination node establishes a cross connection between a main control unit of the destination node and the N second subchannels.
   Herein, the destination node establishes a cross connection between the main control unit of the destination node and N second subchannels, selected by the destination node, between the intermediate node and the destination node.
713. The destination node sends a control channel establishment success message to the adjacent upstream node.
   Herein, the control channel establishment success message sent by the destination node to the adjacent upstream node includes information about the N idle second subchannels selected from the first control link selected on the adjacent upstream node by the destination node. Herein, the adjacent upstream node may be a controller, or may be a transmission node. If the adjacent upstream node is a transmission node, steps 714 to 716 are performed, and if the adjacent upstream node is a controller, step 717 is performed.
714. After receiving the control channel establishment success message sent by the adjacent downstream node, the transmission node selects N idle second subchannels from the first control link selected by the adjacent upstream node.
715. The transmission node establishes a cross connection between the N second subchannels selected by the adjacent downstream node and the N second subchannels selected by the transmission node.
716. The transmission node sends a control channel establishment success message to the adjacent upstream node.
   Herein, the control channel establishment success message sent by the transmission node includes: the N idle second subchannels selected from the second control link selected on the adjacent upstream node by the transmission node.
   When the adjacent upstream node is not a controller, steps 714 to 716 are performed, until the adjacent upstream node in step 716 is a controller, and then step 717 is performed.
717. The controller receives the control channel establishment success message sent by the adjacent downstream node on the control channel.
718. The controller sends a control message to the destination node by using the control channel.
   After the direct control channel is established between the controller and the destination node, the direct control channel may be used to transmit a control message between the controller and the destination node. For example:
   1) The destination node may directly report, by using the control channel, messages such as identifier information, resource information, and link fault information of a data link of the destination node to the controller.
   2) When the controller needs to establish a new path to bear a service, the controller may calculate a service path by using resource information of a data link, and then directly delivers a cross establishment command message to each transmission node on the service path by using the control channel.
   3) When the service path is faulty on a link, nodes at both ends of the link may send fault information to the controller by using the control channel; the controller determines to perform re-routing on the service path or switching to a protection path, and after determining whether to preempt a resource occupied by another service, delivers a cross establishment command message, or a resource preemption command message to a node on the re-routing path or the protection path by using the control channel.

According to the foregoing steps, a direct control channel may be established between the controller and the destination node, to protect secure transmission between the controller and the destination node, and another direct control channel may be established between the controller and the destination node for use as a backup control channel. In this way, when a control channel is faulty, the another control channel may be used to perform transmission. The method used may follow steps 704 to 717, which are not described again herein.

The following describes the method provided in this embodiment of the present invention in a specific application scenario. As shown in FIG. 1, it is assumed that a network includes a controller and five nodes A, B, C, D, and E. That a control channel between the controller and the node E is established is used as an example.

First, the controller and the nodes A, B, C, D, and E send a control link discovery message to a peer node of a control link by using a first subchannel on the control link, after receiving the control link discovery message sent by the peer node, the controller and each node flood an entire network with a control link notification message, so that the controller obtains the control link notification message of each control link in the entire network.

After obtaining the control link notification message of each control link in the entire network, the controller learns a topological structure (including information about each node and port information of each control link) in an entire network shown in FIG. 1 and resource information of a second subchannel of the control link. In this way, routing (assuming that the routing is controller-A-B-E) from the controller to the destination node E and bandwidth information of the control channel may be calculated, that is, the control channel occupies N second subchannels.

The controller first selects a first control link from control links between the controller and the node A, and then sends a control channel establishment message to the node A. The control channel establishment message includes routing information (controller-A-B-E) of the control channel, information about the first control link selected between the controller and the node A by the controller, and bandwidth information of the control channel.

After receiving the control channel establishment message, the node A first selects a second control link from control links between the node A and the node B, and next the node A sends the control channel establishment message to the adjacent downstream node B on the control channel. The control channel establishment message sent by the node A includes routing information of the control channel, bandwidth information of the control channel, and information about the second control link selected by the node A.

After receiving the control channel establishment message that is sent by the controller and that is received by using the first subchannel, same as the node A, the node B first selects a third control link from control links between the node B and the adjacent downstream node (the destination node) E, and then sends a control channel establishment message to the adjacent downstream node (the destination node) E on the control channel. The control channel establishment message sent by the node B includes routing information of the control channel, bandwidth information of the control channel, and information about the third control link selected by the node B.

After receiving, by using the first subchannel, the control channel establishment message sent by the node B, the node E selects N second subchannels from the first control link selected by the node B and establishes a cross connection between the main control unit of the node E and N second subchannels between the node B and the node E.

The node E sends a control channel establishment success message to the node B, where the control channel establishment success message includes information about the N idle second subchannels selected from the third control link selected on the node B by the node E.

After receiving the control channel establishment success message sent by the node E, the node B selects N second subchannels from the second control link selected by the node A and establishes a cross connection between second subchannels between the node A and the node B and second subchannels between the node B and the node E. The node B sends a control channel establishment success message to the node A, where the control channel establishment success message includes information about the N idle second subchannels selected from the second control link selected on the node A by the node B.

After receiving the control channel establishment success message sent by the node B, the node A selects N second subchannels from the first control link selected by the controller and establishes a cross connection between second subchannels between the controller and the node A and second subchannels between the node A and the node B. The node A sends a control channel establishment success message to the controller, where the control channel establishment success message includes information about the N idle second subchannels selected from the first control link selected on the controller by the node A.

In this way, a direct control channel is established between the controller and the destination node by using the second subchannel. By using the control channel, the controller can only send a message to the destination node, and message transmission between the controller and the destination node may be directly performed without needing that another node searches a routing table and performs forwarding.

According to the method for establishing a control channel provided in this embodiment of the present invention, in a centralized control mode, a controller calculates routing information between the controller and a destination node and establishes a direct control channel formed through a cross connection by second subchannels, so that a direct control channel is established between the controller and the node in advance, which resolves a problem of a relatively slow message sending speed caused by a process of DCN routing convergence, hop-by-hop routing forwarding, and routing table search, and can improve the message sending speed, thereby improving network performance.

### Embodiment 4

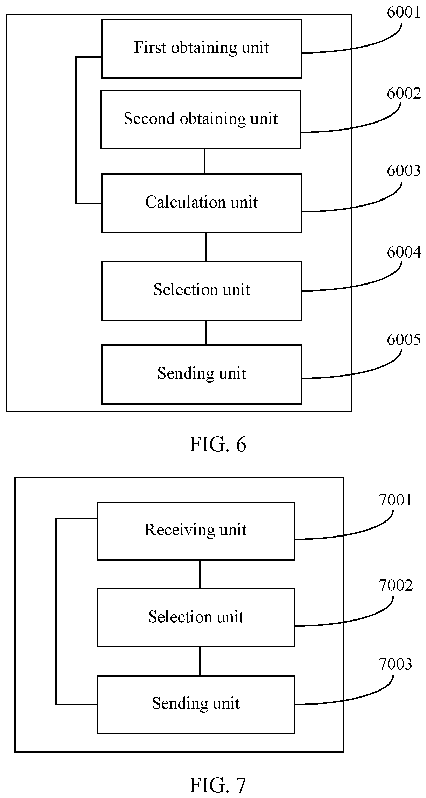

This embodiment of the present invention further provides a controller. As shown in FIG. 6, the controller includes: a first obtaining unit 6001, a second obtaining unit 6002, a calculation unit 6003, a selection unit 6004, and a sending unit 6005.

The first obtaining unit 6001 is configured to obtain a control link notification message sent by a node in a network, where the control link notification message includes node address information of both ends of a control link, port identifiers of both ends of the control link, and resource information of a second subchannel of the control link.

The second obtaining unit 6002 is configured to obtain bandwidth information of a control channel between the controller and a destination node, where the bandwidth information of the control channel includes a resource of a second subchannel that needs to be occupied by the control channel.

The calculation unit 6003 is configured to obtain, through calculation according to the control link notification message, of each control link, obtained by the first obtaining unit 6001 and the bandwidth information, of the control channel, obtained by the second obtaining unit 6002, routing information of the control channel between the controller and the destination node.

The selection unit 6004 is configured to select a first control link from control links between the controller and an adjacent downstream node on the control channel on the control channel, where an idle resource of a second subchannel of the first control link is greater than or equal to the resource of a second subchannel that needs to be occupied by the control channel.

The sending unit 6005 is configured to send a control channel establishment message to the adjacent downstream node on the control channel by using a first subchannel between the controller and the adjacent downstream node on the control channel, so that the adjacent downstream node establishes the control channel on the second subchannel of the first control link, where the control channel establishment message includes the routing information of the control channel, information about the first control link selected by the controller, and the bandwidth information of the control channel.

The resource of the second subchannel that needs to be occupied by the control channel includes a type and a quantity of second subchannels that need to be occupied by the control channel, or a total bandwidth of the second subchannels that need to be occupied by the control channel.

The selection unit 6004 is further configured to: after the first control link is selected from the control links between the controller and the adjacent downstream node on the control channel, select N idle second subchannels from the first control link according to the bandwidth information of the control channel, where N is a positive integer. The control channel establishment message sent by the sending unit 6005 to the adjacent downstream node further includes information about the N second subchannels selected by the controller.

The second obtaining unit 6002 is further configured to receive a control channel establishment success message sent by the adjacent downstream node on the control channel, where the control channel establishment success message includes information about N idle second subchannels selected from the first control link by the adjacent downstream node according to the bandwidth information of the control channel, where N is a positive integer.

The first obtaining unit 6001 is specifically configured to receive a control link notification message with which an entire network is flooded by each node in the network by using the first subchannel, to obtain control link notification messages of the entire network.

This embodiment of the present invention further provides a node, and as shown in FIG. 7, the node includes: a receiving unit 7001, a selection unit 7002, and a sending unit 7003.

The receiving unit 7001 is configured to receive, by using a first subchannel, a control channel establishment message sent by an adjacent upstream node on a control channel, where the control channel establishment message sent by the adjacent upstream node includes routing information of the control channel, information about a first control link selected by the adjacent upstream node, and bandwidth information of the control channel.

The selection unit 7002 is configured to select a second control link from control links between a current node and an adjacent downstream node on the control channel according to the control channel establishment message received by the receiving unit 7001, where an idle resource of a second subchannel of the second control link is greater than or equal to a resource of a second subchannel that needs to be occupied by the control channel.

The sending unit 7003 is configured to send a control channel establishment message to the adjacent downstream node on the control channel by using the first subchannel, so that the adjacent downstream node of the current node establishes the control channel on the second subchannel of the second control link selected by the selection unit 7002, where the control channel establishment message sent by the sending unit 7003 includes the routing information of the control channel, information about the second control link selected by the selection unit 7002, and the bandwidth information of the control channel.

The bandwidth information of the control channel includes the resource of a second subchannel that needs to be occupied by the control channel. The resource of the second subchannel that needs to be occupied by the control channel includes a type and a quantity of second subchannels that need to be occupied by the control channel, or a total bandwidth of the second subchannels that need to be occupied by the control channel.

Optionally, the node further includes a cross unit, and the control channel establishment message further includes information about the N idle second subchannels selected from the first control link by the adjacent upstream node according to the bandwidth information of the control channel, where N is a positive integer. The selection unit 7002 is further configured to: after the second control link is selected from the control links between the current node and the adjacent downstream node on the control channel, select N idle second subchannels from the second control link according to the bandwidth information of the control channel. The cross unit 7004 is configured to establish a cross connection between the N second subchannels selected by the adjacent upstream node and the N second subchannels selected by the selection unit 7002. The control channel establishment message sent by the sending unit 7003 further includes information about the N second subchannels selected by the selection unit.

Alternatively, the receiving unit 7001 is further configured to receive a control channel establishment success message sent by the adjacent downstream node, where the control channel establishment success message sent by the adjacent downstream node includes N idle second subchannels selected from the second control link selected on the current node by the adjacent downstream node according to the bandwidth information of the control channel. The selection unit 7002 is configured to: after the receiving unit 7001 receives the control channel establishment success message, select N idle second subchannels from the first control link according to the bandwidth information of the control channel. The cross unit 7004 is further configured to establish a cross connection between the N second subchannels selected by the adjacent downstream node and the N second subchannels selected by the selection unit 7002. The sending unit 7003 is further configured to send a control channel establishment success message to the adjacent upstream node, where the control channel establishment success message sent by the sending unit includes the N second subchannels selected from the first control link by the selection unit 7002.

The sending unit 7003 is further configured to: before the receiving unit 7001 receives, by using the first subchannel, the control channel establishment message sent by the adjacent upstream node on the control channel, flood an entire network with a control link notification message, where the control link notification message includes node address information of both ends of a control link, port identifiers of both ends of the control link, and resource information of a second subchannel of the control link, where the resource information of the second subchannel includes a quantity of second subchannels and a type of each second subchannel.

The sending unit 7003 is further configured to: before an entire network is flooded with a control link notification message, send a control link discovery message to a peer node of the control link by using a first subchannel on the control link, where the control link discovery message includes a port identifier at a sending end and node address information at the sending end of the control link. The receiving unit 7001 is further configured to receive the control link discovery message sent by the peer node.

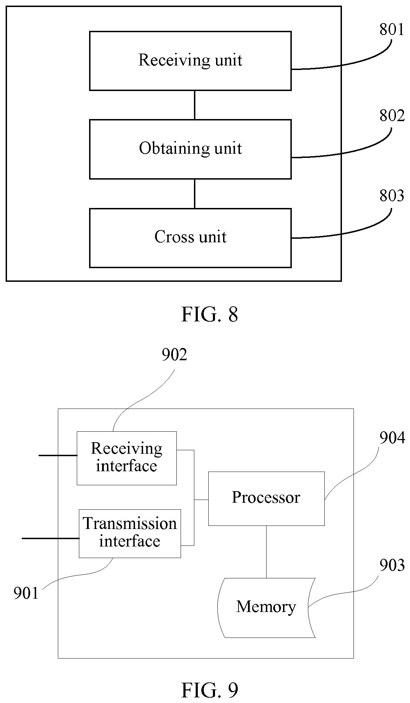

This embodiment of the present invention further provides a node, and as shown in FIG. 8, the node includes: a receiving unit 801, an obtaining unit 802, and a cross unit 803.

The receiving unit 801 is configured to receive, by using a first subchannel, a control channel establishment message sent by an adjacent upstream node on a control channel, where the control channel establishment message sent by the adjacent upstream node includes routing information of the control channel, information about a first control link selected by the adjacent upstream node, and bandwidth information of the control channel, where the bandwidth information of the control channel includes a resource of a second subchannel that needs to be occupied by the control channel.

The obtaining unit 802 is configured to obtain N idle second subchannels from the first control link, where N is a positive integer.

The cross unit 803 is configured to establish a cross connection between a main control unit of a current node and the N second subchannels obtained by the obtaining unit 802.

The resource of the second subchannel that needs to be occupied by the control channel includes a type and a quantity of second subchannels that need to be occupied by the control channel, or a total bandwidth of the second subchannels that need to be occupied by the control channel.

The control channel establishment message further includes information about N idle second subchannels selected from the first control link by the adjacent upstream node according to the bandwidth information of the control channel. The obtaining unit 802 is specifically configured to select N idle second subchannels from the first control link according to the bandwidth information of the control channel. The node further includes a sending unit, where the sending unit is configured to send a control channel establishment success message to the adjacent upstream node, where the control channel establishment success message includes information about the N idle second subchannels selected from the first control link by the obtaining unit 802.

The sending unit is further configured to: before the receiving unit 801 receives, by using the first subchannel, the control channel establishment message sent by the adjacent upstream node on the control channel, flood an entire network with a control link notification message, where the control link notification message includes node address information of both ends of a control link, port identifiers of both ends of the control link, and resource information of a second subchannel of the control link, where the resource information of the second subchannel includes a quantity of second subchannels and a type of each second subchannel, so that the controller obtains the control link notification message obtained by the current node.

The sending unit is further configured to: before an entire network is flooded with a control link notification message, send a control link discovery message to a peer node of the control link by using a first subchannel on the control link, where the control link discovery message includes a port identifier at a sending end and node address information at the sending end of the control link. The receiving unit 801 is further configured to receive the control link discovery message sent by the peer node.

According to the apparatus for establishing a control channel provided in this embodiment of the present invention, in a centralized control mode, a controller calculates routing information between the controller and a destination node and establishes a unique control channel formed through a cross connection by second subchannels, so that a direct control channel is established between the controller and the node in advance, which resolves a problem of a relatively slow message sending speed caused by a process of DCN routing convergence, hop-by-hop routing forwarding, and routing table search, and can improve the message sending speed, thereby improving network performance.

### Embodiment 5

This embodiment of the present invention provides a controller, and as shown in FIG. 9, the controller includes: a transmission interface 901, a receiving interface 902, a memory 903, and a processor 904 that is separately connected to the transmission interface 901, the receiving interface 902, and the memory 903. The transmission interface 901 and the receiving interface 902 may be a same interface during specific implementation. The memory 903 stores a set of program code, and the processor 904 is configured to invoke the program code that is stored in the memory 903, to execute the following operations:
The processor 904 is configured to obtain, by using the receiving interface 902, a control link notification message sent by a node in a network, where the control link notification message includes node address information of both ends of a control link, port identifiers of both ends of the control link, and resource information of a second subchannel of the control link.

The processor 904 is configured to obtain bandwidth information of a control channel between the controller and a destination node, where the bandwidth information of the control channel includes a resource of a second subchannel that needs to be occupied by the control channel.

The processor 904 is configured to obtain, through calculation according to the obtained control link notification message of each control link and the obtained bandwidth information of the control channel, routing information of the control channel between the controller and the destination node.

The processor 904 is further configured to select a first control link from control links between the controller and an adjacent downstream node on the control channel on the control channel according to the obtained routing information of the control channel and the obtained bandwidth information of the control channel, where an idle resource of the first control link is greater than or equal to the resource of a second subchannel that needs to be occupied by the control channel.

The processor 904 is configured to send a control channel establishment message to an adjacent downstream node on the control channel by using the transmission interface 901, so that the adjacent downstream node establishes the control channel on the second subchannel of the first control link. The control channel establishment message includes the routing information of the control channel, information about the first control link selected by the controller, and the bandwidth information of the control channel.

The resource of the second subchannel that needs to be occupied by the control channel includes a type and a quantity of second subchannels that need to be occupied by the control channel, or a total bandwidth of the second subchannels that need to be occupied by the control channel.

The processor 904 is specifically configured to: after the first control link is selected from the control links between the controller and the adjacent downstream node on the control channel, select N idle second subchannels from the first control link, where N is a positive integer. The control channel establishment message sent to the adjacent downstream node by using the transmission interface 901 further includes information about the N second subchannels selected by the controller.

The processor 904 is configured to receive, by using the receiving interface 902, a control channel establishment success message sent by the adjacent downstream node on the control channel, where the establishment success message includes information about N idle second subchannels selected from the first control link by the adjacent downstream node according to the bandwidth information of the control channel, where N is a positive integer.

The processor 904 is further configured to receive, by using the receiving interface 902, a control link notification message with which an entire network is flooded by each node in the network, to obtain control link notification messages of the entire network.

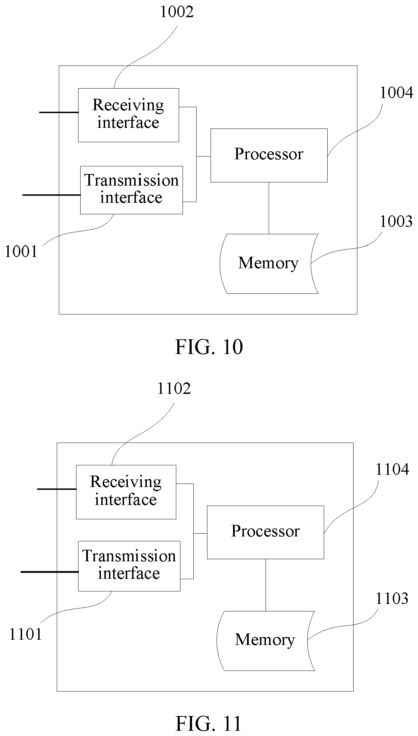

This embodiment of the present invention provides a node, and as shown in FIG. 10, the node includes: a transmission interface 1001, a receiving interface 1002, a memory 1003, and a processor 1004 that is separately connected to the transmission interface 1001, the receiving interface 1002, and the memory 1003. The transmission interface 1001 and the receiving interface 1002 may be a same interface during specific implementation. The memory 1003 stores a set of program code, and the processor 1004 is configured to invoke the program code that is stored in the memory 1003, to execute the following operations:
The processor 1004 is configured to receive, by using the receiving interface 1002, a control channel establishment message sent by an adjacent upstream node on a control channel, where the control channel establishment message sent by the adjacent upstream node includes routing information of the control channel, information about a first control link selected by the adjacent upstream node, and bandwidth information of the control channel.

The processor 1004 is configured to select a second control link from control links between a current node and an adjacent downstream node on the control channel according to the control channel establishment message received by using the receiving interface 1002, where an idle resource of the second control link is greater than or equal to a resource of a second subchannel that needs to be occupied by the control channel.

The processor 1004 is further configured to send a control channel establishment message to the adjacent downstream node on the control channel by using the transmission interface 1001, so that the adjacent downstream node of the current node establishes the control channel on the second subchannel of the second control link selected by the processor 1004, where the control channel establishment message sent by the current node includes the routing information of the control channel, information about the first control link selected by the processor 1004, and the bandwidth information of the control channel.

The bandwidth information of the control channel includes the resource of a second subchannel that needs to be occupied by the control channel. The resource of the second subchannel that needs to be occupied by the control channel includes a type and a quantity of second subchannels that need to be occupied by the control channel, or a total bandwidth of the second subchannels that need to be occupied by the control channel.

The control channel establishment message further includes information about N idle second subchannels selected from the first control link by the adjacent upstream node according to the bandwidth information of the control channel, where N is a positive integer. The processor 1004 is further configured to: after the second control link is selected from the control links between the current node and the adjacent downstream node on the control channel, select N idle second subchannels from the second control link according to the bandwidth information of the control channel. The processor 1004 is further configured to establish a cross connection between the N second subchannels selected by the adjacent upstream node and the N second subchannels. The processor 1004 is configured to send a control channel establishment message to the adjacent downstream node on the control channel by using the transmission interface 1001, where the control channel establishment message further includes information about the N second subchannels selected by the processor 1004.

The processor 1004 is configured to receive, by using the receiving interface 1002, a control channel establishment success message sent by the adjacent downstream node, where the control channel establishment success message sent by the adjacent downstream node includes N idle second subchannels selected from the second control link selected on the current node by the adjacent downstream node according to the bandwidth information of the control channel. The processor 1004 is configured to: after receiving the control channel establishment success message by using the receiving interface 1002, select N idle second subchannels from the first control link according to the bandwidth information of the control channel. The processor 1004 is further configured to establish a cross connection between the N second subchannels selected by the adjacent downstream node and the N second subchannels. The processor 1004 is configured to send a control channel establishment success message to the adjacent upstream node by using the transmission interface 1001, where the control channel establishment success message sent by the transmission interface 1001 includes the N second subchannels selected from the first control link by the processor 1004.

The processor 1004 is further configured to: before the receiving interface 1002 receives the control channel establishment message sent by the adjacent upstream node on the control channel, flood an entire network with a control link notification message by using the transmission interface 1001, where the control link notification message includes node address information of both ends of a control link, port identifiers of both ends of the control link, and resource information of a second subchannel of the control link, where the resource information of the second subchannel includes a quantity of second subchannels and a type of each second subchannel.

The processor 1004 is configured to: before an entire network is flooded with a control link notification message, send a control link discovery message to a peer node of the control link by using the transmission interface 1001, where the control link discovery message includes a port identifier at a sending end and node address information at the sending end of the control link; and receive, by using the receiving interface 1002, the control link discovery message sent by the peer node.

This embodiment of the present invention provides a node, and as shown in FIG. 11, the node includes: a transmission interface 1101, a receiving interface 1102, a memory 1103, and a processor 1104 that is separately connected to the transmission interface 1101, the receiving interface 1102, and the memory 1103. The transmission interface 1101 and the receiving interface 1102 may be a same interface during specific implementation. The memory 1103 stores a set of program code, and the processor 1104 is configured to invoke the program code that is stored in the memory 1103, to execute the following operations:
The processor 1104 is configured to receive, by using the receiving interface 1102, a control channel establishment message sent by an adjacent upstream node on a control channel, where the control channel establishment message sent by the adjacent upstream node includes routing information of the control channel, information about a first control link selected by the adjacent upstream node, and bandwidth information of the control channel, where the bandwidth information of the control channel includes a resource of a second subchannel that needs to be occupied by the control channel.

The processor 1104 is configured to obtain N idle second subchannels from the first control link.

The processor 1104 is further configured to establish a cross connection between a main control unit of the node and the N second subchannels.

The resource of the second subchannel that needs to be occupied by the control channel includes a type and a quantity of second subchannels that need to be occupied by the control channel, or a total bandwidth of the second subchannels that need to be occupied by the control channel.

The control channel establishment message further includes information about N idle second subchannels selected from the first control link by the adjacent upstream node according to the bandwidth information of the control channel. The processor 1104 is specifically configured to select N idle second subchannels from the first control link according to the bandwidth information of the control channel, and send a control channel establishment success message to the adjacent upstream node by using the transmission interface 1101, where the control channel establishment success message includes information about the N idle second subchannels selected from the first control link by the processor 1104.

The processor 1104 is further configured to: before the receiving interface 1102 receives the control channel establishment message sent by the adjacent upstream node on the control channel, flood an entire network with a control link notification message by using the transmission interface 1101, where the control link notification message includes node address information of both ends of a control link, port identifiers of both ends of the control link, and resource information of a second subchannel of the control link, where the resource information of the second subchannel includes a quantity of second subchannels and a type of each second subchannel, so that the controller obtains the control link notification message obtained by the destination node.

The processor 1104 is configured to receive, by using the receiving interface 1102, a control link discovery message sent by a peer node, where the control link discovery message includes a port identifier at a sending end and node address information at the sending end of the control link. Before the entire network is flooded with the control link notification message obtained by the node, a control link discovery message is sent to the peer node of the control link by using the transmission interface 1101, where the control link discovery message includes a port identifier at a sending end and node address information at the sending end of the control link. The control link discovery message sent by the peer node is received by using the receiving interface 1102.

According to the apparatus for establishing a control channel provided in this embodiment of the present invention, in a centralized control mode, a controller calculates routing information between the controller and a destination node and establishes a unique control channel formed through a cross connection by second subchannels, so that a direct control channel is established between the controller and the node in advance, which resolves a problem of a relatively slow message sending speed caused by a process of DCN routing convergence, hop-by-hop routing forwarding, and routing table search, and can improve the message sending speed, thereby improving network performance.

### Embodiment 6

This embodiment of the present invention provides a system for establishing a control channel, and as shown in FIG. 1, the system includes: a controller 11, and nodes A, B and E. The controller 11 is the controller shown in FIG. 6, the nodes A and B are the nodes shown in FIG. 7, the node E is the node shown in FIG. 8, and the node E is a destination node.

The controller 11 obtains, through calculation according to obtained control link notification message sent by each node in a network and obtained bandwidth information of a control channel, routing information of the control channel. The controller first selects a first control link between the controller and the node A, and sends a control channel establishment message to the node A. After receiving the control channel establishment message, the node A also selects a second control link between the node A and the node B, and sends a control channel establishment message to the node B. After receiving the control channel establishment message, the node B also selects a third control link between the node B and the node E, and sends a control channel establishment message to the node E. After receiving the control channel establishment message sent by the node B, the node E selects, from the third control link selected by the node B, a second subchannel used to establish the control channel, establishes a cross connection between the second subchannel and a main control unit of the node E, and then sends a control channel establishment success message to the node B. After receiving the control channel establishment success message, the node B selects, from the second control link selected by the node A, a second subchannel used to establish the control channel, establishes a cross connection between second subchannels on both sides of the node B, and then sends a control channel establishment success message to the node A. After receiving the control channel establishment success message, the node A selects, from the first control link selected by the controller, a second subchannel used to establish the control channel, and establishes a cross connection between second subchannels on both sides of the node A, so that a unique, direct control channel is established between the controller 11 and the node E.

Certainly, the node A may also be a destination node; in this case, the controller 11 selects a first control link between the controller 11 and the node A, and sends a control channel establishment message to the node A. After receiving the control channel establishment message sent by the controller 11, the node A selects, from the first control link selected by the controller 11, a second subchannel used to establish the control channel, and establishes a cross connection between a main control unit of the node A and the second subchannel, so that the control channel is established between the controller 11 and the destination node.

This embodiment of the present invention further provides a system for establishing a control channel, and as shown in FIG. 1, the system includes: a controller 11, and nodes A, B and E. The controller 11 is the controller shown in FIG. 6, the nodes A and B are the nodes shown in FIG. 7, the node E is the node shown in FIG. 8, and the node E is a destination node.

The controller 11 obtains, through calculation according to obtained control link notification message sent by each node in a network and obtained bandwidth information of a control channel, routing information of the control channel. The controller first selects a first control link between the controller and the node A, then selects, from the first control link, a second subchannel used to establish the control channel, and sends a control channel establishment message to the node A. After receiving the control channel establishment message, the node A also selects a second control link between the node A and the node B, then selects, from the second control link, a second subchannel used to establish the control channel, establishes a cross connection between second subchannels on both sides of the node A, and sends a control channel establishment message to the node B. After receiving the control channel establishment message, the node B also selects a third control link between the node B and the node E, then selects, from the third control link, a second subchannel used to establish the control channel, establishes a cross connection between second subchannels on both sides of the node B, and sends a control channel establishment message to the node E. After receiving the control channel establishment message sent by the node B, the node E establishes a cross connection between the second subchannel selected from the third control link by the node B and a main control unit of the node E, so that a unique, direct control channel is established between the controller 11 and the node E.

Certainly, the node A may also be a destination node; in this case, the controller 11 selects a first control link between the controller 11 and the node A, selects, from the first control link, a second subchannel used to establish a control channel, and sends a control channel establishment message to the node A. After receiving the control channel establishment message sent by the controller 11, the node A establishes a cross connection between a main control unit of the node A and the second subchannel, so that a control channel is established between the controller 11 and the destination node.

According to the system for establishing a control channel provided in this embodiment of the present invention, in a centralized control mode, a controller calculates routing information between the controller and a destination node and establishes a unique control channel formed through a cross connection by second subchannels, so that a direct control channel is established between the controller and the node in advance, which resolves a problem of a relatively slow message sending speed caused by a process of DCN routing convergence, hop-by-hop routing forwarding, and routing table search, and can improve the message sending speed, thereby improving network performance.

A person of ordinary skill in the art may understand that all or some of the steps of the method embodiments may be implemented by a program instructing related hardware. The program may be stored in a computer readable storage medium. When the program runs, the steps of the method embodiments are performed. The foregoing storage medium includes: any medium that can store program code, such as a ROM, a RAM, a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for establishing a control channel, comprising:
sending, by a controller, a control link discovery message to a peer node of the control link by using a first subchannel on the control link, and receiving the control link discovery message sent by the peer node, wherein the control link discovery message comprises a port identifier at a sending end and node address information at the sending end of the control link;
obtaining (301), by the controller, a control link notification message sent by a node in a network, wherein the control link notification message comprises node address information of both ends of a control link, port identifiers of both ends of the control link, and resource information of a second subchannel of the control link;
obtaining (302), by the controller, bandwidth information of a control channel between the controller and a destination node, wherein the bandwidth information of the control channel comprises a resource of a second subchannel that needs to be occupied by the control channel;
obtaining (303), by the controller through calculation according to the control link notification message and the bandwidth information of the control channel, routing information of the control channel between the controller and the destination node;
selecting (304), by the controller, a first control link from control links between the controller and an adjacent downstream node on the control channel, wherein an idle resource of the first control link is greater than or equal to the resource of the second subchannel that needs to be occupied by the control channel; and
sending (305), by the controller, a control channel establishment message to the adjacent downstream node by using a first subchannel between the controller and the adjacent downstream node, so that the adjacent downstream node establishes the control channel on the second subchannel of the first control link, wherein the control channel establishment message comprises the routing information of the control channel, information about the first control link selected by the controller, and the bandwidth information of the control channel.

2. The method according to claim 1, wherein the resource of the second subchannel that needs to be occupied by the control channel comprises a type and a quantity of second subchannels that need to be occupied by the control channel, or a total bandwidth of the second subchannels that need to be occupied by the control channel.

3. The method according to claim 1 or 2, wherein after the selecting, by the controller, a first control link from control links between the controller and an adjacent downstream node on the control channel, the method further comprises:
selecting, by the controller, N idle second subchannels from the first control link according to the bandwidth information of the control channel, wherein N is a positive integer, wherein
the control channel establishment message further comprises information about the N second subchannels selected by the controller.

4. A method for establishing a control channel, comprising:
sending, by a transmission node, a control link discovery message to a peer node of the control link by using a first subchannel on the control link, and receiving the control link discovery message sent by the peer node, wherein the control link discovery message comprises a port identifier at a sending end and node address information at the sending end of the control link;
receiving (401), by the transmission node by using a first subchannel, a control channel establishment message sent by an adjacent upstream node on a control channel, wherein the control channel establishment message sent by the adjacent upstream node comprises routing information of the control channel, information about a first control link selected by the adjacent upstream node, and bandwidth information of the control channel;
selecting (402), by the transmission node, a second control link from control links between the transmission node and an adjacent downstream node on the control channel according to the bandwidth information of the control channel, wherein an idle resource of the second control link is greater than or equal to a resource of a second subchannel that needs to be occupied by the control channel; and
sending (403), by the transmission node, a control channel establishment message to the adjacent downstream node on the control channel by using the first subchannel, so that the adjacent downstream node of the transmission node establishes the control channel on the second subchannel of the second control link, wherein the control channel establishment message sent by the transmission node comprises the routing information of the control channel, information about the second control link, and the bandwidth information of the control channel, wherein the bandwidth information of the control channel comprises the resource of a second subchannel that needs to be occupied by the control channel.

5. The method according to claim 4, wherein the resource of the second subchannel that needs to be occupied by the control channel comprises a type and a quantity of second subchannels that need to be occupied by the control channel, or a total bandwidth of the second subchannels that need to be occupied by the control channel.

6. The method according to claim 4 or 5, wherein the control channel establishment message that is sent by the adjacent upstream node and that is received by the transmission node further comprises information about N idle second subchannels selected from the first control link by the adjacent upstream node according to the bandwidth information of the control channel, wherein N is a positive integer; and
after the selecting, by the transmission node, a second control link from control links between the transmission node and an adjacent downstream node on the control channel, the method further comprises:
selecting, by the transmission node, N idle second subchannels from the second control link according to the bandwidth information of the control channel; and
establishing, by the transmission node, a cross connection between the N second subchannels selected by the adjacent upstream node and the N second subchannels selected by the transmission node, wherein
the control channel establishment message sent by the transmission node to the adjacent downstream node on the control channel further comprises information about the N second subchannels selected from the second control link by the transmission node.

7. A method for establishing a control channel, comprising:
sending, by a destination node, a control link discovery message to a peer node of the control link by using a first subchannel on the control link, and receiving the control link discovery message sent by the peer node, wherein the control link discovery message comprises a port identifier at a sending end and node address information at the sending end of the control link;
receiving (501), by the destination node by using a first subchannel, a control channel establishment message sent by an adjacent upstream node on a control channel, wherein the control channel establishment message comprises routing information of the control channel, information about a first control link selected by the adjacent upstream node, and bandwidth information of the control channel, wherein the bandwidth information of the control channel comprises a resource of a second subchannel that needs to be occupied by the control channel;
obtaining (502), by the destination node, N idle second subchannels from the first control link, wherein N is a positive integer; and
establishing (503), by the destination node, a cross connection between a main control unit of the destination node and the N second subchannels.

8. A controller, comprising:
a sending unit (6005), configured to send a control link discovery message to a peer node of the control link by using a first subchannel on the control link, and receiving the control link discovery message sent by the peer node, wherein the control link discovery message comprises a port identifier at a sending end and node address information at the sending end of the control link;
a first obtaining unit (6001), configured to obtain a control link notification message sent by a node in a network, wherein the control link notification message comprises node address information of both ends of a control link, port identifiers of both ends of the control link, and resource information of a second subchannel of the control link;
a second obtaining unit (6002), configured to obtain bandwidth information of a control channel between the controller and a destination node, wherein the bandwidth information of the control channel comprises a resource of a second subchannel that needs to be occupied by the control channel;
a calculation unit (6003), configured to obtain, through calculation according to the control link notification message obtained by the first obtaining unit and the bandwidth information, of the control channel, obtained by the second obtaining unit, routing information of the control channel between the controller and the destination node;
a selection unit (6004), configured to select a first control link from control links between the controller and an adjacent downstream node on the control channel, wherein an idle resource of the first control link is greater than or equal to the resource of a second subchannel that needs to be occupied by the control channel; and
the sending unit, is configured to send a control channel establishment message to the adjacent downstream node by using a first subchannel between the controller and the adjacent downstream node, so that the adjacent downstream node establishes the control channel on the second subchannel of the first control link, wherein the control channel establishment message comprises the routing information of the control channel, information about the first control link selected by the controller, and the bandwidth information of the control channel.

9. The controller according to claim 8, wherein the resource of the second subchannel that needs to be occupied by the control channel comprises a type and a quantity of second subchannels that need to be occupied by the control channel, or a total bandwidth of the second subchannels that need to be occupied by the control channel.

10. The controller according to claim 8 or 9, wherein
the selection unit is further configured to: after the first control link is selected from the control links between the controller and the adjacent downstream node on the control channel, select N idle second subchannels from the first control link according to the bandwidth information of the control channel, wherein N is a positive integer; and
the control channel establishment message sent by the sending unit to the adjacent downstream node further comprises information about the N second subchannels selected by the controller.

11. The controller according to claim 8 or 9, wherein
the second obtaining unit is further configured to receive a control channel establishment success message sent by the adjacent downstream node on the control channel, wherein the control channel establishment success message comprises information about N idle second subchannels selected from the first control link by the adjacent downstream node according to the bandwidth information of the control channel, wherein N is a positive integer.

12. A node, comprising:
a sending unit configured to send a control link discovery message to a peer node of the control link by using a first subchannel on the control link, wherein the control link discovery message comprises a port identifier at a sending end and node address information at the sending end of the control link;
a receiving unit configured to receive the control link discovery message sent by the peer node, and configured to receive, by using a first subchannel, a control channel establishment message sent by an adjacent upstream node on a control channel, wherein the control channel establishment message sent by the adjacent upstream node comprises routing information of the control channel, information about a first control link selected by the adjacent upstream node, and bandwidth information of the control channel;
a selection unit, configured to select a second control link from control links between a current node and an adjacent downstream node on the control channel according to the control channel establishment message received by the receiving unit, wherein an idle resource of the second control link is greater than or equal to a resource of a second subchannel that needs to be occupied by the control channel; and
the sending unit, is configured to send a control channel establishment message to the adjacent downstream node on the control channel by using the first subchannel, so that the adjacent downstream node of the current node establishes the control channel on the second subchannel of the second control link selected by the selection unit, wherein the control channel establishment message sent by the sending unit comprises the routing information of the control channel, information about the second control link selected by the selection unit, and the bandwidth information of the control channel, wherein the bandwidth information of the control channel comprises the resource of a second subchannel that needs to be occupied by the control channel.

13. The node according to claim 12, wherein the resource of the second subchannel that needs to be occupied by the control channel comprises a type and a quantity of second subchannels that need to be occupied by the control channel, or a total bandwidth of the second subchannels that need to be occupied by the control channel.

14. The node according to claim 12 or 13, further comprising a cross unit, wherein the control channel establishment message further comprises information about N idle second subchannels selected from the first control link by the adjacent upstream node according to the bandwidth information of the control channel, wherein N is a positive integer;
the selection unit is further configured to: after the second control link is selected from the control links between the current node and the adjacent downstream node on the control channel, select N idle second subchannels from the second control link according to the bandwidth information of the control channel; and
the cross unit is configured to establish a cross connection between the N second subchannels selected by the adjacent upstream node and the N second subchannels selected by the selection unit, wherein
the control channel establishment message sent by the sending unit further comprises information about the N second subchannels selected by the selection unit.

15. A node, comprising:
a sending unit configured to send a control link discovery message to a peer node of the control link by using a first subchannel on the control link, wherein the control link discovery message comprises a port identifier at a sending end and node address information at the sending end of the control link;
a receiving unit configured to receive the control link discovery message sent by the peer node, and configured to receive, by using a first subchannel, a control channel establishment message sent by an adjacent upstream node on a control channel, wherein the control channel establishment message sent by the adjacent upstream node comprises routing information of the control channel, information about a first control link selected by the adjacent upstream node, and bandwidth information of the control channel, wherein the bandwidth information of the control channel comprises a resource of a second subchannel that needs to be occupied by the control channel;
an obtaining unit, configured to obtain N idle second subchannels from the first control link, wherein N is a positive integer; and
a cross unit, configured to establish a cross connection between a main control unit of a current node and the N second subchannels obtained by the obtaining unit.

## Patentansprüche

1. Verfahren zum Aufbauen eines Steuerkanals, das Folgendes umfasst:
Senden einer Steuerübertragungsstreckenerkennungsmeldung durch einen Controller an einen Peerknoten der Steuerübertragungsstrecke durch Nutzung eines ersten Unterkanals auf der Steuerübertragungsstrecke und Empfangen der durch den Peerknoten gesendeten Steuerübertragungsstreckenerkennungsmeldung, wobei die Steuerübertragungsstreckenerkennungsmeldung einen Portbezeichner an einem Sendeende und Knotenadressinformationen am Sendeende der Steuerübertragungsstrecke umfasst;
Erhalten (301) einer durch einen Knoten in einem Netz gesendeten Steuerübertragungsstreckenbenachrichtigungsmeldung durch den Controller, wobei die Steuerübertragungsstreckenbenachrichtigungsmeldung Knotenadressinformationen beider Enden einer Steuerübertragungsstrecke, Portbezeichner beider Enden der Steuerübertragungsstrecke und Ressourceninformationen eines zweiten Unterkanals der Steuerübertragungsstrecke umfasst;
Erhalten (302) von Bandbreiteninformationen eines Steuerkanals zwischen dem Controller und einem Zielknoten durch den Controller, wobei die Bandbreiteninformationen des Steuerkanals eine Ressource eines zweiten Unterkanals, die durch den Steuerkanal zu belegen ist, umfassen;
Erhalten (303) von Routinginformationen des Steuerkanals zwischen dem Controller und dem Zielknoten durch den Controller durch Kalkulieren gemäß der Steuerübertragungsstreckenbenachrichtigungsmeldung und den Bandbreiteninformationen des Steuerkanals;
Auswählen (304) einer ersten Steuerübertragungsstrecke aus Steuerübertragungsstrecken zwischen dem Controller und einem benachbarten Downstream-Knoten auf dem Steuerkanal durch den Controller, wobei eine freie Ressource der ersten Steuerübertragungsstrecke größer als oder gleich der Ressource des zweiten Unterkanals ist, die durch den Steuerkanal zu belegen ist; und
Senden (305) einer Steuerkanalaufbaumeldung durch den Controller an den benachbarten Downstream-Knoten durch Nutzung eines ersten Unterkanals zwischen dem Controller und dem benachbarten Downstream-Knoten, sodass der benachbarte Downstream-Knoten den Steuerkanal auf dem zweiten Unterkanal der ersten Steuerübertragungsstrecke aufbaut, wobei die Steuerkanalaufbaumeldung die Routinginformationen des Steuerkanals, Informationen über die durch den Controller ausgewählte erste Steuerübertragungsstrecke und die Bandbreiteninformationen des Steuerkanals umfasst.

2. Verfahren nach Anspruch 1, wobei die Ressource des zweiten Unterkanals, die durch den Steuerkanal zu belegen ist, einen Typ und eine Menge zweiter Unterkanäle, die durch den Steuerkanal zu belegen sind, oder eine Gesamtbandbreite der zweiten Unterkanäle, die durch den Steuerkanal zu belegen sind, umfasst.

3. Verfahren nach Anspruch 1 oder 2, wobei das Verfahren nach dem Auswählen einer ersten Steuerübertragungsstrecke aus Steuerübertragungsstrecken zwischen dem Controller und einem benachbarten Downstream-Knoten auf dem Steuerkanal durch den Controller ferner Folgendes umfasst:
Auswählen von N freien zweiten Unterkanälen aus der ersten Steuerübertragungsstrecke durch den Controller gemäß den Bandbreiteninformationen des Steuerkanals, wobei N eine positive ganze Zahl ist, wobei
die Steuerkanalaufbaumeldung ferner Informationen über die durch den Controller ausgewählten N zweiten Unterkanäle umfasst.

4. Verfahren zum Aufbauen eines Steuerkanals, das Folgendes umfasst:
Senden einer Steuerübertragungsstreckenerkennungsmeldung durch einen Sendeknoten an einen Peerknoten der Steuerübertragungsstrecke durch Nutzung eines ersten Unterkanals auf der Steuerübertragungsstrecke und Empfangen der durch den Peerknoten gesendeten Steuerübertragungsstreckenerkennungsmeldung, wobei die Steuerübertragungsstreckenerkennungsmeldung einen Portbezeichner an einem Sendeende und Knotenadressinformationen am Sendeende der Steuerübertragungsstrecke umfasst;
Empfangen (401) einer durch einen benachbarten Upstream-Knoten auf einem Steuerkanal gesendeten Steuerkanalaufbaumeldung durch den Sendeknoten durch Nutzung eines ersten Unterkanals, wobei die durch den benachbarten Upstream-Knoten gesendete Steuerkanalaufbaumeldung Routinginformationen des Steuerkanals, Informationen über eine durch den benachbarten Upstream-Knoten ausgewählte erste Steuerübertragungsstrecke und Bandbreiteninformationen des Steuerkanals umfasst;
Auswählen (402) einer zweiten Steuerübertragungsstrecke aus Steuerübertragungsstrecken zwischen dem Sendeknoten und einem benachbarten Downstream-Knoten auf dem Steuerkanal durch den Sendeknoten gemäß den Bandbreiteninformationen des Steuerkanals, wobei eine freie Ressource der zweiten Steuerübertragungsstrecke größer als oder gleich einer Ressource eines zweiten Unterkanals ist, die durch den Steuerkanal zu belegen ist; und
Senden (403) einer Steuerkanalaufbaumeldung durch den Sendeknoten an den benachbarten Downstream-Knoten auf dem Steuerkanal durch Nutzung des ersten Unterkanals, sodass der benachbarte Downstream-Knoten des Sendeknotens den Steuerkanal auf dem zweiten Unterkanal der zweiten Steuerübertragungsstrecke aufbaut, wobei die durch den Sendeknoten gesendete Steuerkanalaufbaumeldung die Routinginformationen des Steuerkanals, Informationen über die zweite Steuerübertragungsstrecke und die Bandbreiteninformationen des Steuerkanals umfasst, wobei die Bandbreiteninformationen des Steuerkanals die Ressource eines zweiten Unterkanals, die durch den Steuerkanal zu belegen ist, umfassen.

5. Verfahren nach Anspruch 4, wobei die Ressource des zweiten Unterkanals, die durch den Steuerkanal zu belegen ist, einen Typ und eine Menge zweiter Unterkanäle, die durch den Steuerkanal zu belegen sind, oder eine Gesamtbandbreite der zweiten Unterkanäle, die durch den Steuerkanal zu belegen sind, umfasst.

6. Verfahren nach Anspruch 4 oder 5, wobei die Steuerkanalaufbaumeldung, die durch den benachbarten Upstream-Knoten gesendet und durch den Sendeknoten empfangen wird, ferner Informationen über N freie zweite Unterkanäle, die durch den benachbarten Upstream-Knoten gemäß den Bandbreiteninformationen des Steuerkanals aus der ersten Steuerübertragungsstrecke ausgewählt werden, umfasst, wobei N eine positive ganze Zahl ist; und
das Verfahren nach dem Auswählen einer zweiten Steuerübertragungsstrecke aus Steuerübertragungsstrecken zwischen dem Sendeknoten und einem benachbarten Downstream-Knoten auf dem Steuerkanal durch den Sendeknoten ferner Folgendes umfasst:
Auswählen von N freien zweiten Unterkanälen aus der zweiten Steuerübertragungsstrecke durch den Sendeknoten gemäß den Bandbreiteninformationen des Steuerkanals; und
Aufbauen einer Kreuzverbindung zwischen den durch den benachbarten Upstream-Knoten ausgewählten N zweiten Unterkanälen und den durch den Sendeknoten ausgewählten N zweiten Unterkanälen durch den Sendeknoten, wobei
die durch den Sendeknoten an den benachbarten Downstream-Knoten auf dem Steuerkanal gesendete Steuerkanalaufbaumeldung ferner Informationen über die durch den Sendeknoten aus der zweiten Steuerübertragungsstrecke ausgewählten N zweiten Unterkanäle umfasst.

7. Verfahren zum Aufbauen eines Steuerkanals, das Folgendes umfasst:
Senden einer Steuerübertragungsstreckenerkennungsmeldung durch einen Zielknoten an einen Peerknoten der Steuerübertragungsstrecke durch Nutzung eines ersten Unterkanals auf der Steuerübertragungsstrecke und Empfangen der durch den Peerknoten gesendeten Steuerübertragungsstreckenerkennungsmeldung, wobei die Steuerübertragungsstreckenerkennungsmeldung einen Portbezeichner an einem Sendeende und Knotenadressinformationen am Sendeende der Steuerübertragungsstrecke umfasst;
Empfangen (501) einer durch einen benachbarten Upstream-Knoten auf einem Steuerkanal gesendeten Steuerkanalaufbaumeldung durch den Zielknoten durch Nutzung eines ersten Unterkanals, wobei die Steuerkanalaufbaumeldung Routinginformationen des Steuerkanals, Informationen über eine durch den benachbarten Upstream-Knoten ausgewählte erste Steuerübertragungsstrecke und Bandbreiteninformationen des Steuerkanals umfasst, wobei die Bandbreiteninformationen des Steuerkanals eine Ressource eines zweiten Unterkanals, die durch den Steuerkanal zu belegen ist, umfassen;
Erhalten (502) von N freien zweiten Unterkanälen aus der ersten Steuerübertragungsstrecke durch den Zielknoten, wobei N eine positive ganze Zahl ist; und
Aufbauen (503) einer Kreuzverbindung zwischen einer Hauptsteuereinheit des Zielknotens und den N zweiten Unterkanälen durch den Zielknoten.

8. Controller, der Folgendes umfasst:
eine Sendeeinheit (6005), die konfiguriert ist, um eine Steuerübertragungsstreckenerkennungsmeldung an einen Peerknoten der Steuerübertragungsstrecke durch Nutzung eines ersten Unterkanals auf der Steuerübertragungsstrecke zu senden, und Empfangen der durch den Peerknoten gesendeten Steuerübertragungsstreckenerkennungsmeldung, wobei die Steuerübertragungsstreckenerkennungsmeldung einen Portbezeichner an einem Sendeende und Knotenadressinformationen am Sendeende der Steuerübertragungsstrecke umfasst;
eine erste Erhalteeinheit (6001), die konfiguriert ist, um eine durch einen Knoten in einem Netz gesendete Steuerübertragungsstreckenbenachrichtigungsmeldung zu erhalten, wobei die Steuerübertragungsstreckenbenachrichtigungsmeldung Knotenadressinformationen beider Enden einer Steuerübertragungsstrecke, Portbezeichner beider Enden der Steuerübertragungsstrecke und Ressourceninformationen eines zweiten Unterkanals der Steuerübertragungsstrecke umfasst;
eine zweite Erhalteeinheit (6002), die konfiguriert ist, um Bandbreiteninformationen eines Steuerkanals zwischen dem Controller und einem Zielknoten zu erhalten, wobei die Bandbreiteninformationen des Steuerkanals eine Ressource eines zweiten Unterkanals, die durch den Steuerkanal zu belegen ist, umfassen;
eine Kalkulationseinheit (6003), die konfiguriert ist, um Routinginformationen des Steuerkanals zwischen dem Controller und dem Zielknoten durch Kalkulieren gemäß der durch die erste Erhalteeinheit erhaltenen Steuerübertragungsstreckenbenachrichtigungsmeldung und den durch die zweite Erhalteeinheit erhaltenen Bandbreiteninformationen des Steuerkanals zu erhalten;
eine Auswahleinheit (6004), die konfiguriert ist, um eine erste Steuerübertragungsstrecke aus Steuerübertragungsstrecken zwischen dem Controller und einem benachbarten Downstream-Knoten auf dem Steuerkanal auszuwählen, wobei eine freie Ressource der ersten Steuerübertragungsstrecke größer als oder gleich der Ressource eines zweiten Unterkanals ist, die durch den Steuerkanal zu belegen ist; und
die Sendeeinheit konfiguriert ist, um eine Steuerkanalaufbaumeldung an den benachbarten Downstream-Knoten durch Nutzung eines ersten Unterkanals zwischen dem Controller und dem benachbarten Downstream-Knoten zu senden, sodass der benachbarte Downstream-Knoten den Steuerkanal auf dem zweiten Unterkanal der ersten Steuerübertragungsstrecke aufbaut, wobei die Steuerkanalaufbaumeldung die Routinginformationen des Steuerkanals, Informationen über die durch den Controller ausgewählte erste Steuerübertragungsstrecke und die Bandbreiteninformationen des Steuerkanals umfasst.

9. Controller nach Anspruch 8, wobei die Ressource des zweiten Unterkanals, die durch den Steuerkanal zu belegen ist, einen Typ und eine Menge zweiter Unterkanäle, die durch den Steuerkanal zu belegen sind, oder eine Gesamtbandbreite der zweiten Unterkanäle, die durch den Steuerkanal zu belegen sind, umfasst.

10. Controller nach Anspruch 8 oder 9, wobei
die Auswahleinheit ferner konfiguriert ist, um: nachdem die erste Steuerübertragungsstrecke aus den Steuerübertragungsstrecken zwischen dem Controller und dem benachbarten Downstream-Knoten auf dem Steuerkanal ausgewählt worden ist, N freie zweite Unterkanäle aus der ersten Steuerübertragungsstrecke gemäß den Bandbreiteninformationen des Steuerkanals auszuwählen, wobei N eine positive ganze Zahl ist; und
die durch die Sendeeinheit an den benachbarten Downstream-Knoten gesendete Steuerkanalaufbaumeldung ferner Informationen über die durch den Controller ausgewählten N zweiten Unterkanäle umfasst.

11. Controller nach Anspruch 8 oder 9, wobei
die zweite Erhalteeinheit ferner konfiguriert ist, um eine durch den benachbarten Downstream-Knoten auf dem Steuerkanal gesendete Steuerkanalaufbauerfolgsmeldung zu empfangen, wobei die Steuerkanalaufbauerfolgsmeldung Informationen über N freie zweite Unterkanäle, die durch den benachbarten Downstream-Knoten gemäß den Bandbreiteninformationen des Steuerkanals aus der ersten Steuerübertragungsstrecke ausgewählt werden, umfasst, wobei N eine positive ganze Zahl ist.

12. Knoten, der Folgendes umfasst:
eine Sendeeinheit, die konfiguriert ist, um eine Steuerübertragungsstreckenerkennungsmeldung an einen Peerknoten der Steuerübertragungsstrecke durch Nutzung eines ersten Unterkanals auf der Steuerübertragungsstrecke zu senden, wobei die Steuerübertragungsstreckenerkennungsmeldung einen Portbezeichner an einem Sendeende und Knotenadressinformationen am Sendeende der Steuerübertragungsstrecke umfasst;
eine Empfangseinheit, die konfiguriert ist, um die durch den Peerknoten gesendete Steuerübertragungsstreckenerkennungsmeldung zu empfangen, und konfiguriert ist, um durch Nutzung eines ersten Unterkanals eine durch einen benachbarten Upstream-Knoten auf einem Steuerkanal gesendete Steuerkanalaufbaumeldung zu empfangen, wobei die durch den benachbarten Upstream-Knoten gesendete Steuerkanalaufbaumeldung Routinginformationen des Steuerkanals, Informationen über eine durch den benachbarten Upstream-Knoten ausgewählte erste Steuerübertragungsstrecke und Bandbreiteninformationen des Steuerkanals umfasst;
eine Auswahleinheit, die konfiguriert ist, um eine zweite Steuerübertragungsstrecke aus Steuerübertragungsstrecken zwischen einem aktuellen Knoten und einem benachbarten Downstream-Knoten auf dem Steuerkanal gemäß der durch die Empfangseinheit empfangenen Steuerkanalaufbaumeldung auszuwählen, wobei eine freie Ressource der zweiten Steuerübertragungsstrecke größer als oder gleich einer Ressource eines zweiten Unterkanals ist, die durch den Steuerkanal zu belegen ist; und
die Sendeeinheit konfiguriert ist, um eine Steuerkanalaufbaumeldung an den benachbarten Downstream-Knoten auf dem Steuerkanal durch Nutzung des ersten Unterkanals zu senden, sodass der benachbarte Downstream-Knoten des aktuellen Knotens den Steuerkanal auf dem zweiten Unterkanal der durch die Auswahleinheit ausgewählten zweiten Steuerübertragungsstrecke aufbaut, wobei die durch die Sendeeinheit gesendete Steuerkanalaufbaumeldung die Routinginformationen des Steuerkanals, Informationen über die durch die Auswahleinheit ausgewählte zweite Steuerübertragungsstrecke und die Bandbreiteninformationen des Steuerkanals umfasst, wobei die Bandbreiteninformationen des Steuerkanals die Ressource eines zweiten Unterkanals, die durch den Steuerkanal zu belegen ist, umfassen.

13. Knoten nach Anspruch 12, wobei die Ressource des zweiten Unterkanals, die durch den Steuerkanal zu belegen ist, einen Typ und eine Menge zweiter Unterkanäle, die durch den Steuerkanal zu belegen sind, oder eine Gesamtbandbreite der zweiten Unterkanäle, die durch den Steuerkanal zu belegen sind, umfasst.

14. Knoten nach Anspruch 12 oder 13, der ferner eine Kreuzeinheit umfasst, wobei die Steuerkanalaufbaumeldung ferner Informationen über N freie zweite Unterkanäle, die durch den benachbarten Upstream-Knoten gemäß den Bandbreiteninformationen des Steuerkanals aus der ersten Steuerübertragungsstrecke ausgewählt werden, umfasst, wobei N eine positive ganze Zahl ist;
die Auswahleinheit ferner konfiguriert ist, um: nachdem die zweite Steuerübertragungsstrecke aus den Steuerübertragungsstrecken zwischen dem aktuellen Knoten und dem benachbarten Downstream-Knoten auf dem Steuerkanal ausgewählt worden ist, N freie zweite Unterkanäle aus der zweiten Steuerübertragungsstrecke gemäß den Bandbreiteninformationen des Steuerkanals auszuwählen; und
die Kreuzeinheit konfiguriert ist, um eine Kreuzverbindung zwischen den durch den benachbarten Upstream-Knoten ausgewählten N zweiten Unterkanälen und den durch die Auswahleinheit ausgewählten N zweiten Unterkanälen aufzubauen, wobei die durch die Sendeeinheit gesendete Steuerkanalaufbaumeldung ferner Informationen über die durch die Auswahleinheit ausgewählten N zweiten Unterkanäle umfasst.

15. Knoten, der Folgendes umfasst:
eine Sendeeinheit, die konfiguriert ist, um eine Steuerübertragungsstreckenerkennungsmeldung an einen Peerknoten der Steuerübertragungsstrecke durch Nutzung eines ersten Unterkanals auf der Steuerübertragungsstrecke zu senden, wobei die Steuerübertragungsstreckenerkennungsmeldung einen Portbezeichner an einem Sendeende und Knotenadressinformationen am Sendeende der Steuerübertragungsstrecke umfasst;
eine Empfangseinheit, die konfiguriert ist, um die durch den Peerknoten gesendete Steuerübertragungsstreckenerkennungsmeldung zu empfangen, und konfiguriert ist, um durch Nutzung eines ersten Unterkanals eine durch einen benachbarten Upstream-Knoten auf einem Steuerkanal gesendete Steuerkanalaufbaumeldung zu empfangen, wobei die durch den benachbarten Upstream-Knoten gesendete Steuerkanalaufbaumeldung Routinginformationen des Steuerkanals, Informationen über eine durch den benachbarten Upstream-Knoten ausgewählte erste Steuerübertragungsstrecke und Bandbreiteninformationen des Steuerkanals umfasst, wobei die Bandbreiteninformationen des Steuerkanals eine Ressource eines zweiten Unterkanals, die durch den Steuerkanal zu belegen ist, umfassen;
eine Erhalteeinheit, die konfiguriert ist, um N freie zweite Unterkanäle aus der ersten Steuerübertragungsstrecke zu erhalten, wobei N eine positive ganze Zahl ist; und
eine Kreuzeinheit, die konfiguriert ist, um eine Kreuzverbindung zwischen einer Hauptsteuereinheit eines aktuellen Knotens und den durch die Erhalteeinheit erhaltenen N zweiten Unterkanälen aufzubauen.

## Revendications

1. Procédé permettant d'établir un canal de contrôle, comprenant les étapes suivantes :
envoyer, par un contrôleur, un message de découverte de liaison de contrôle à un noeud homologue de la liaison de contrôle en utilisant un premier sous-canal sur la liaison de contrôle, et recevoir le message de découverte de liaison de contrôle envoyé par le noeud homologue, le message de découverte de liaison de contrôle comportant un identifiant de port au niveau d'une extrémité d'envoi et des informations d'adresse de noeud au niveau de l'extrémité d'envoi de la liaison de contrôle ;
obtenir (301), par le contrôleur, un message de notification de liaison de contrôle envoyé par un noeud dans un réseau, le message de notification de liaison de contrôle comprenant des informations d'adresse de noeud des deux extrémités d'une liaison de contrôle, des identifiants de port des deux extrémités de la liaison de contrôle, et des informations de ressource d'un deuxième sous-canal de la liaison de contrôle ;
obtenir (302), par le contrôleur, des informations de bande passante d'un canal de contrôle entre le contrôleur et un noeud de destination, les informations de bande passante du canal de contrôle comportant une ressource d'un deuxième sous-canal qui doit être occupé par le canal de contrôle ;
obtenir (303), par le contrôleur par l'intermédiaire d'un calcul selon le message de notification de liaison de contrôle et les informations de bande passante du canal de contrôle, des informations de routage du canal de contrôle entre le contrôleur et le noeud de destination ;
sélectionner (304), par le contrôleur, une première liaison de contrôle à partir de liaisons de contrôle entre le contrôleur et un noeud aval adjacent sur le canal de contrôle, une ressource inactive de la première liaison de contrôle étant supérieure ou égale à la ressource du deuxième sous-canal qui doit être occupé par le canal de contrôle ; et
envoyer (305), par le contrôleur, un message d'établissement de canal de contrôle au noeud aval adjacent en utilisant un premier sous-canal entre le contrôleur et le noeud aval adjacent, pour que le noeud aval adjacent établisse le canal de contrôle sur le deuxième sous-canal de la première liaison de contrôle, le message d'établissement de canal de contrôle comportant les informations de routage du canal de contrôle, des informations concernant la première liaison de contrôle sélectionnée par le contrôleur, et les informations de bande passante du canal de contrôle.

2. Procédé selon la revendication 1, dans lequel la ressource du deuxième sous-canal qui doit être occupé par le canal de contrôle comprend un type et une quantité de deuxièmes sous-canaux qui doivent être occupés par le canal de contrôle, ou une bande passante totale des deuxièmes sous-canaux qui doivent être occupés par le canal de contrôle.

3. Procédé selon la revendication 1 ou 2, dans lequel, après l'étape consistant à sélectionner, par le contrôleur, une première liaison de contrôle à partir de liaisons de contrôle entre le contrôleur et un noeud aval adjacent sur le canal de contrôle, le procédé comprend en outre :
sélectionner, par le contrôleur, N deuxièmes sous-canaux inactifs à partir de la première liaison de contrôle selon les informations de bande passante du canal de contrôle, N étant un nombre entier positif,
le message d'établissement de canal de contrôle comportant en outre des informations concernant les N deuxièmes sous-canaux sélectionnés par le contrôleur.

4. Procédé permettant d'établir un canal de contrôle, comprenant :
envoyer, par un noeud de transmission, un message de découverte de liaison de contrôle à un noeud homologue de la liaison de contrôle en utilisant un premier sous-canal sur la liaison de contrôle, et recevoir le message de découverte de liaison de contrôle envoyé par le noeud homologue, le message de découverte de liaison de contrôle comportant un identifiant de port au niveau d'une extrémité d'envoi et des informations d'adresse de noeud au niveau de l'extrémité d'envoi de la liaison de contrôle ;
recevoir (401), par le noeud de transmission en utilisant un premier sous-canal, un message d'établissement de canal de contrôle envoyé par un noeud amont adjacent sur un canal de contrôle, le message d'établissement de canal de contrôle envoyé par le noeud amont adjacent comprenant des informations de routage du canal de contrôle, des informations concernant une première liaison de contrôle sélectionnée par le noeud amont adjacent, et des informations de bande passante du canal de contrôle ;
sélectionner (402), par le noeud de transmission, une deuxième liaison de contrôle à partir de liaisons de contrôle entre le noeud de transmission et un noeud aval adjacent sur le canal de contrôle selon les informations de bande passante du canal de contrôle, une ressource inactive de la deuxième liaison de contrôle étant supérieure ou égale à une ressource d'un deuxième sous-canal qui doit être occupé par le canal de contrôle ; et
envoyer (403), par le noeud de transmission, un message d'établissement de canal de contrôle au noeud aval adjacent sur le canal de contrôle en utilisant le premier sous-canal, pour que le noeud aval adjacent du noeud de transmission établisse le canal de contrôle sur le deuxième sous-canal de la deuxième liaison de contrôle, le message d'établissement de canal de contrôle envoyé par le noeud de transmission comportant les informations de routage du canal de contrôle, des informations concernant la deuxième liaison de contrôle, et les informations de bande passante du canal de contrôle, les informations de bande passante du canal de contrôle comprenant la ressource d'un deuxième sous-canal qui doit être occupé par le canal de contrôle.

5. Procédé selon la revendication 4, dans lequel la ressource du deuxième sous-canal qui doit être occupé par le canal de contrôle comprend un type et une quantité de deuxièmes sous-canaux qui doivent être occupés par le canal de contrôle, ou une bande passante totale des deuxièmes sous-canaux qui doivent être occupés par le canal de contrôle.

6. Procédé selon la revendication 4 ou 5, dans lequel le message d'établissement de canal de contrôle qui est envoyé par le noeud amont adjacent et qui est reçu par le noeud de transmission comprend en outre des informations concernant N deuxièmes sous-canaux inactifs sélectionnés à partir de la première liaison de contrôle par le noeud amont adjacent selon les informations de bande passante du canal de contrôle, N étant un nombre entier positif ; et
après l'étape consistant à sélectionner, par le noeud de transmission, une deuxième liaison de contrôle à partir de liaisons de contrôle entre le noeud de transmission et un noeud aval adjacent sur le canal de contrôle, le procédé comprend en outre :
sélectionner, par le noeud de transmission, N deuxièmes sous-canaux inactifs à partir de la deuxième liaison de contrôle selon les informations de bande passante du canal de contrôle ; et
établir, par le noeud de transmission, une connexion croisée entre les N deuxièmes sous-canaux sélectionnés par le noeud amont adjacent et les N deuxièmes sous-canaux sélectionnés par le noeud de transmission,
le message d'établissement de canal de contrôle envoyé par le noeud de transmission au noeud aval adjacent sur le canal de contrôle comprenant en outre des informations concernant les N deuxièmes sous-canaux sélectionnés à partir de la deuxième liaison de contrôle par le noeud de transmission.

7. Procédé permettant d'établir un canal de contrôle, comprenant ;
envoyer, par un noeud de destination, un message de découverte de liaison de contrôle à un noeud homologue de la liaison de contrôle en utilisant un premier sous-canal sur la liaison de contrôle, et recevoir le message de découverte de liaison de contrôle envoyé par le noeud homologue, le message de découverte de liaison de contrôle comportant un identifiant de port au niveau d'une extrémité d'envoi et des informations d'adresse de noeud au niveau de l'extrémité d'envoi de la liaison de contrôle ;
recevoir (501), par le noeud de destination en utilisant un premier sous-canal, un message d'établissement de canal de contrôle envoyé par un noeud amont adjacent sur un canal de contrôle, le message d'établissement de canal de contrôle comportant des informations de routage du canal de contrôle, des informations concernant une première liaison de contrôle sélectionnée par le noeud amont adjacent, et des informations de bande passante du canal de contrôle, les informations de bande passante du canal de contrôle comprenant une ressource d'un deuxième sous-canal qui doit être occupé par le canal de contrôle ;
obtenir (502), par le noeud de destination, N deuxièmes sous-canaux inactifs à partir de la première liaison de contrôle, N étant un nombre entier positif ; et
établir (503), par le noeud de destination, une connexion croisée entre une unité de commande principale du noeud de destination et les N deuxièmes sous-canaux.

8. Contrôleur, comprenant :
une unité émettrice (6005), configurée pour envoyer un message de découverte de liaison de contrôle à un noeud homologue de la liaison de contrôle en utilisant un premier sous-canal sur la liaison de contrôle, et en recevant le message de découverte de liaison de contrôle envoyé par le noeud homologue, le message de découverte de liaison de contrôle comportant un identifiant de port au niveau d'une extrémité d'envoi et des informations d'adresse de noeud au niveau de l'extrémité d'envoi de la liaison de contrôle ;
une première unité d'obtention (6001), configurée pour obtenir un message de notification de liaison de contrôle envoyé par un noeud dans un réseau, le message de notification de liaison de contrôle comprenant des informations d'adresse de noeud des deux extrémités d'une liaison de contrôle, des identifiants de port des deux extrémités de la liaison de contrôle, et des informations de ressource d'un deuxième sous-canal de la liaison de contrôle ;
une deuxième unité d'obtention (6002), configurée pour obtenir des informations de bande passante d'un canal de contrôle entre le contrôleur et un noeud de destination, les informations de bande passante du canal de contrôle comportant une ressource d'un deuxième sous-canal qui doit être occupé par le canal de contrôle ;
une unité de calcul (6003), configurée pour obtenir, par l'intermédiaire d'un calcul selon le message de notification de liaison de contrôle obtenu par la première unité d'obtention et les informations de bande passante, du canal de contrôle, obtenues par la deuxième unité d'obtention, des informations de routage du canal de contrôle entre le contrôleur et le noeud de destination ;
une unité de sélection (6004), configurée pour sélectionner une première liaison de contrôle à partir de liaisons de contrôle entre le contrôleur et un noeud aval adjacent sur le canal de contrôle, une ressource inactive de la première liaison de contrôle étant supérieure ou égale à la ressource d'un deuxième sous-canal qui doit être occupé par le canal de contrôle ; et
l'unité émettrice est configurée pour envoyer un message d'établissement de canal de contrôle au noeud aval adjacent en utilisant un premier sous-canal entre le contrôleur et le noeud aval adjacent, pour que le noeud aval adjacent établisse le canal de contrôle sur le deuxième sous-canal de la première liaison de contrôle, le message d'établissement de canal de contrôle comprenant les informations de routage du canal de contrôle, des informations concernant la première liaison de contrôle sélectionnée par le contrôleur, et les informations de bande passante du canal de contrôle.

9. Contrôleur selon la revendication 8, dans lequel la ressource du deuxième sous-canal qui doit être occupé par le canal de contrôle comprend un type et une quantité de deuxièmes sous-canaux qui doivent être occupés par le canal de contrôle, ou une bande passante totale des deuxièmes sous-canaux qui doivent être occupés par le canal de contrôle.

10. Contrôleur selon la revendication 8 ou 9, dans lequel :
l'unité de sélection est en outre configurée pour : après que la première liaison de contrôle a été sélectionnée à partir des liaisons de contrôle entre le contrôleur et le noeud aval adjacent sur le canal de contrôle, sélectionner N deuxièmes sous-canaux inactifs à partir de la première liaison de contrôle selon les informations de bande passante du canal de contrôle, N étant un nombre entier positif ; et
le message d'établissement de canal de contrôle envoyé par l'unité émettrice au noeud aval adjacent comprend en outre des informations concernant les N deuxièmes sous-canaux sélectionnés par le contrôleur.

11. Contrôleur selon la revendication 8 ou 9, dans lequel :
la deuxième unité d'obtention est en outre configurée pour recevoir un message de succès d'établissement de canal de contrôle envoyé par le noeud aval adjacent sur le canal de contrôle, le message de succès d'établissement de canal de contrôle comportant des informations concernant N deuxièmes sous-canaux inactifs sélectionnés à partir de la première liaison de contrôle par le noeud aval adjacent selon les informations de bande passante du canal de contrôle, N étant un nombre entier positif.

12. Noeud, comprenant :
une unité émettrice configurée pour envoyer un message de découverte de liaison de contrôle à un noeud homologue de la liaison de contrôle en utilisant un premier sous-canal sur la liaison de contrôle, le message de découverte de liaison de contrôle comportant un identifiant de port au niveau d'une extrémité d'envoi et des informations d'adresse de noeud au niveau de l'extrémité d'envoi de la liaison de contrôle ;
une unité de réception configurée pour revoir le message de découverte de liaison de contrôle envoyé par le noeud homologue, et configurée pour recevoir, en utilisant un premier sous-canal, un message d'établissement de canal de contrôle envoyé par un noeud amont adjacent sur un canal de contrôle, le message d'établissement de canal de contrôle envoyé par le noeud amont adjacent comprenant des informations de routage du canal de contrôle, des informations concernant une première liaison de contrôle sélectionnée par le noeud amont adjacent, et des informations de bande passante du canal de contrôle ;
une unité de sélection, configurée pour sélectionner une deuxième liaison de contrôle à partir de liaisons de contrôle entre un noeud courant et un noeud aval adjacent sur le canal de contrôle selon le message d'établissement de canal de contrôle reçu par l'unité de réception, une ressource inactive de la deuxième liaison de contrôle étant supérieure ou égale à une ressource d'un deuxième sous-canal qui doit être occupé par le canal de contrôle ; et
l'unité émettrice est configurée pour envoyer un message d'établissement de canal de contrôle au noeud aval adjacent sur le canal de contrôle en utilisant le premier sous-canal, pour que le noeud aval adjacent du noeud courant établisse le canal de contrôle sur le deuxième sous-canal de la deuxième liaison de contrôle sélectionnée par l'unité de sélection, le message d'établissement de canal de contrôle envoyé par l'unité émettrice comprenant les informations de routage du canal de contrôle, des informations concernant la deuxième liaison de contrôle sélectionnée par l'unité de sélection, et les informations de bande passante du canal de contrôle, les informations de bande passante du canal de contrôle comprenant la ressource d'un deuxième sous-canal qui doit être occupé par le canal de contrôle.

13. Noeud selon la revendication 12, dans lequel la ressource du deuxième sous-canal qui doit être occupé par le canal de contrôle comprend un type et une quantité de deuxièmes sous-canaux qui doivent être occupés par le canal de contrôle, ou une bande passante totale des deuxièmes sous-canaux qui doivent être occupés par le canal de contrôle.

14. Noeud selon la revendication 12 ou 13, comprenant en outre une unité croisée, le message d'établissement de canal de contrôle comprenant en outre des informations concernant N deuxièmes sous-canaux inactifs sélectionnés à partir de la première liaison de contrôle par le noeud amont adjacent selon les informations de bande passante du canal de contrôle, N étant un nombre entier positif ;
l'unité de sélection est en outre configurée pour : après que la deuxième liaison de contrôle a été sélectionnée à partir des liaisons de contrôle entre le noeud courant et le noeud aval adjacent sur le canal de contrôle, sélectionner N deuxièmes sous-canaux inactifs à partir de la deuxième liaison de contrôle selon les informations de bande passante du canal de contrôle ; et
l'unité croisée est configurée pour établir une connexion croisée entre les N deuxièmes sous-canaux sélectionnés par le noeud amont adjacent et les N deuxièmes sous-canaux sélectionnés par l'unité de sélection,
le message d'établissement de canal de contrôle envoyé par l'unité émettrice comprenant en outre des informations concernant les N deuxièmes sous-canaux sélectionnés par l'unité de sélection.

15. Noeud, comprenant :
une unité émettrice configurée pour envoyer un message de découverte de liaison de contrôle à un noeud homologue de la liaison de contrôle en utilisant un premier sous-canal sur la liaison de contrôle, le message de découverte de liaison de contrôle comportant un identifiant de port au niveau d'une extrémité d'envoi et des informations d'adresse de noeud au niveau de l'extrémité d'envoi de la liaison de contrôle ;
une unité de réception configurée pour recevoir le message de découverte de liaison de contrôle envoyé par le noeud homologue, et configurée pour recevoir, en utilisant un premier sous-canal, un message d'établissement de canal de contrôle envoyé par un noeud amont adjacent sur un canal de contrôle, le message d'établissement de canal de contrôle envoyé par le noeud amont adjacent comportant des informations de routage du canal de contrôle, des informations concernant une première liaison de contrôle sélectionnée par le noeud amont adjacent, et des informations de bande passante du canal de contrôle, les informations de bande passante du canal de contrôle comprenant une ressource d'un deuxième sous-canal qui doit être occupé par le canal de contrôle ;
une unité d'obtention, configurée pour obtenir N deuxièmes sous-canaux inactifs à partir de la première liaison de contrôle, N étant un nombre entier positif ; et
une unité croisée, configurée pour établir une connexion croisée entre une unité de commande principale d'un noeud courant et les N deuxièmes sous-canaux obtenus par l'unité d'obtention.
